# EUROPEAN PATENT APPLICATION

(11) **EP 1 376 442 A2**
(43) Date of publication of application: **02.01.2004**
(21) Application number: 03447078.1
(22) Date of filing: 03.04.2003
(51) Int. Cl.: G06F 17/60

(54) **Operational relationship management centre for clearing operational transactions and method of operating the same**

(30) Priority: 03.04.2002 GB 0207670
(71) Applicant: Big Bang Ventures Comm VA, 8500 Kortrijk (BE); GIMV NV, 2018 Antwerpen (BE); Adviesbeheer GIMV Information and Communication Technology NV, 2018 Antwerpen (BE)
(72) Inventor: Keppens, Wim, 9250 Waasmunster (BE); Van Kerkhove, Peter, 2630 Aartselaar (BE); De Keukeleire, Herman, 1600 Sint-Laureins-Berchem (BE); Verbeke, Wim, 9050 Zwijnaarde (BE); Debersaques, John, 9040 Gent (BE); Nieuwenhuijse, Abgar Adriaan Gerard, 5625 SW Eindhowen (NL)
(74) Representative: Bird, William Edward

(57) **Abstract**

A computer based system for management of communications between a operational relationship management centre and at least a first and a second entity associated with the provision of telecommunications services is described, the first and second entities and the operational relationship management centre being linked for communication purposes by a wide area network, the operational relationship management centre being for central control of structured communications between the at least first and second entities, the operational relationship management centre comprising:
first memory means for storing information relating to concrete objects associated with the provision of a telecommunications service and under control of at least one of the entities, or default information relating to an unknown object,
second memory means for storing information defining predefined Business processes allowed by the operational relationship management centre, each Business process comprising an exchange of at least one message from the first entity to the second entity via the operational relationship management centre or vice versa,
means for providing the first or second entity with access to one of the predefined Business processes,
means for allowing the first or second entity to associate a concrete object or an unknown object with the Business process, and
tracking means for tracking the progress of the Business process between the first and second entities.

## Description

### Technical field of the invention

The present invention relates to an operational relationship management centre for clearing, acceleration and translating operational transactions and business processes and a method of operating the same, for example for use in communications with and between a number of telecommunications service providers.

### Background of the invention

The global telecommunications industry involves a lot of different national and international "players" (telecom operators, incumbent local exchange carriers (ILECs), competitive local exchange carriers (CLECs), mobile operators, internet service providers (ISPs), suppliers, resellers, etc.), all depending highly on the quality and efficiency of the operational relationships with each other for the delivery of end-to-end services (as customer, provider, or both at the same time). Managing these interdependencies is painfully intense, crucial and mission critical.

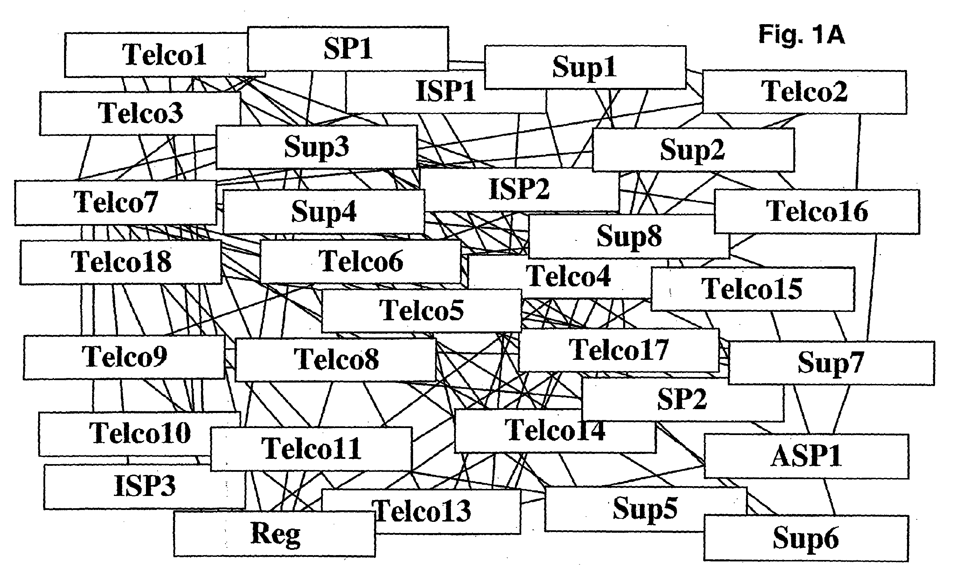

The telecommunications (telecom) world we live in is a complex environment of telecom operators, service providers, suppliers, subcontractors, resellers, etc. Fig. 1a is a schematic representation of this industry where everybody is customer, provider and competitor at the same time. The operational interactions, also called operational communications between these organisations create significant layers of overhead. In Fig. 1a, Telco means "telecom operator" (such as e.g. Infonet, Global Crossing, Orange, Level 3, Carrier 1, Worldcom, Ebone, KPN), Sup means "equipment supplier" (such as e.g. Alcatel, Cisco, Nortel, Ericsson, Lucent), Reg means "regulator" (such as e.g. BIPT, OPTA), SP means "service provider" (such as e.g. Tplan, Inttos, Vandenbergh, Telinfo), ISP means "internet service provider" (such as e.g. Wanadoo, Planet Internet, Skynet, Tiscali) and ASP means "application service provider" (such as e.g. 2Servall, Annapa, Xdrive). Each party has its own procedures and processes that are more or less continuously updated due to company reorganisation and mergers. On top of that, communication between these parties is often mission-critical (for their end-customers), which makes effective management of SLAs (Service Level Agreements) between parties essential for the success of these businesses.

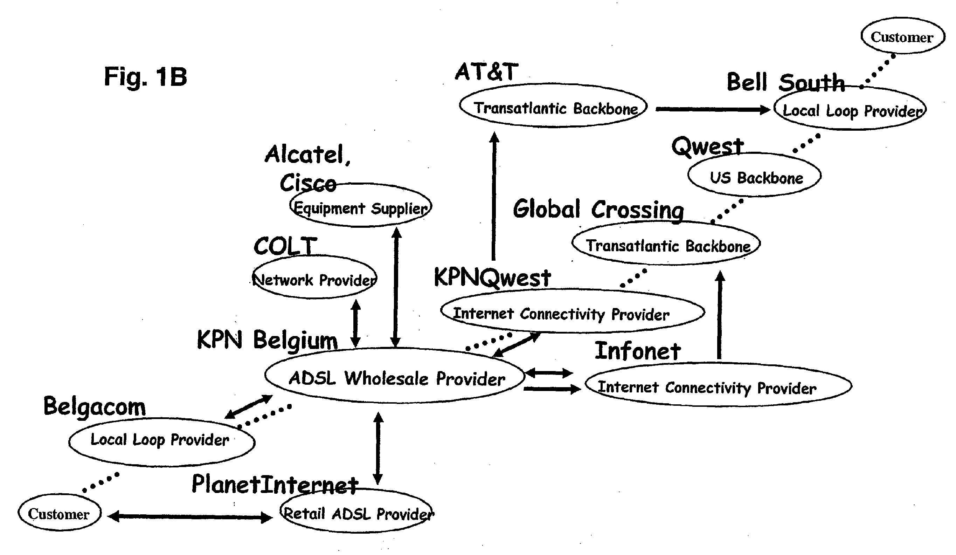

An example of a number of interdependent operators needed for providing internet connectivity with an ADSL connection is shown in Fig. 1b. The number of operators needed to achieve the result is overwhelming and generally underestimated. When problems occur, for example when lines or upgrades are ordered, or two parties have to share information, communication between parties needs to take place to streamline continuous operations. This communication currently relies on unstructured means like e-mail, telephone and faxes. Only in very few exceptions a dedicated automated interface has been developed for a specific business relation, creating a lot of in-house IT overhead.

When talking about operational communication, different types of operational contacts between organisation A and organisation B can be distinguished. A non-limitating list is given hereinafter:
- Fault notification: A notifies B of a problem with a service delivered from A to B (pro-active notification); or B contacts A to query A on potential problems in A's domain (re-active notification).
- Planned activities: A notifies B of potential service affecting planned works on a given service from A to B.
- Premises access: A requests access to the premises of B where equipment of A is installed.
- Status and escalation: A wants to status B on progress of events; or A wants to escalate within B because progress is not matching expectations or agreement.
- Installed base tracking: Services given from A to B are subject to periodic review and continuous visibility to B.
- Provisioning: Services from A to B under progress of delivery are subject to status and reporting to B
- Order handling: services ordered from A to B are subject to a defined process with agreed templates and responsibilities
- Quote management: Services quotes from B, C, D, E , ... to A based upon request from A..
- Infrastructure co-ordination request: If A wants to perform infrastructure works he is obliged to notify B and even other companies C, D, etc...
For all of the communications described above, the current situation is slow, prone to errors and not cost effective, for the following reasons:
- Manual process: Two operators might well be using their own trouble-ticketing systems, but communications between the organisations are still done manually via phone, e-mail or fax only. This unmanaged hand-over does not allow parties to track or measure the effectiveness of the operational relationship. Currently, the only way of tracking and measuring is for each party to maintain spreadsheets and trouble ticket histories which detail the inter-company communication.
- Proprietary formats: The formats that are used for communications are proprietary and not standardised over the parties. Most companies do not get a grip on standardising their operational interfaces. The ones that have tried, are finding it almost impossible because their target parties seem to change all the time (contacts within companies are volatile due to internal promotions, re-organisations, job moves, etc.) or because they do not have the right information at their disposal. In addition, in the current telecommunications world A is dependent on B who in turn will prove to be dependent on C, and so on. The manual process described cascades through the entire interconnected services chain and each time data is re-input in proprietary forms and resent via different means (fax, mail, spreadsheets) to other parties. Per communication event people suffer from delays and the added possibility of errors.
- ID referencing: a network element owned by party A, but used by party B, will typically have a different name/asset code/ID. It is imperative for two parties that need to communicate with each other, to have a common object referencing capability. Precious time is lost and mistakes are made while trying to find out about what network element the other party is talking about and hence to manage the cross-referencing of one party's asset codes (ID's) to those that are used by its partners.
- Change information: Change is constant in the telecom world. People change jobs, assets are added, sold or moved and each time the source party has to inform all its operational relations that this change has taken place. Each of these target parties is then expected to update their systems and procedures. Unfortunately this does not happen often and even when it happens this manual process is too time consuming and error prone.
- SLA management: An ever increasing number of telecom customers are placing greater importance in Service Level Agreements (SLA's). This forces telecom operators to in turn also become more diligent and vigilant when managing the SLA's and obtaining improved Quality of Service (QoS) with their respective suppliers. It is clear that the current manual system does not enable adherence to internally and customer-defined SLA's.
- No appetite for administrative work: Operations personnel are frustrated by the amount of administrative work they need to do. As explained, they spend too much time on administrative issues (ID-referencing, forwarding and updating change data, tracing trouble-tickets, etc.) and do not have enough time to work on moving the resolution of the reported problem forward. Engineers in the trenches complain that they spend more than 30% of their time on these unproductive issues. In addition to the expense in salaries, this factor also demotivates engineers and pushes them to change jobs, generating even more administrative overhead for their ex-colleagues and costs in recruiting and training new hires.
Further problems occurring with presently existing systems may be as follows:
- Routing information to the right person in the right place: The world is getting more and more mobile: people move around, telecom operators have network operating centres and partners all over the world. Direct and easy contact at any time and any place has become crucial. This calls for optimised communication tools.
- Tracing and measuring: A manager of support engineers and their operational relations need to trace what is happening with outstanding issues. They need to be able to measure the effectiveness of people and processes. Managers are craving for a system that provides this type of feed-back and reporting at the press of a button.
- Urgency: Business-critical applications and processes run over global networks. A 10 minutes cut might stop a production line in a Far-East car manufacturing plant, or an airline company might lose hundreds of seats due to an unavailable call centre. It is clear that when problems occur, every minute is worth a lot of money.
- Need for detail: As the interconnected networks become more and more complex, the need for detailed and correct information is essential to operate these networks and services that run over them.

### Summary of the invention

It is an object of the present invention to overcome the problems and drawbacks of the prior art operational communication systems and methods of operating the same. It is an object of the present invention to reduce or eliminate manual processes. It is an object of the present invention to provide a standardised format for communication.

It is an object of the present invention to provide a communication system which allows for cross-referencing assets and network elements.

It is an object of the present invention to provide an operational relation management system and method of operating the same in which information is routed to the right person in the right place.

In particular it is an object of the present invention to provide a centralised system in which each source party can be responsible for maintaining its own information and to make the system easily accessible to all parties, thereby eliminating the need for duplication and, hence, time loss and errors as well as methods of operating such a centralised system.

It is furthermore an object of the present invention to provide a system and method of operating the same which has auditing capabilities on SLA and QoS in complex relationships by the involved parties and/or a neutral third party, and to provide time stamping of all communications.

It is an object of the present invention to provide a communication system and method of operating the same which provides a model for fault notification, planned activities, premise access, status and escalation, installed base tracking, provisioning tracking, infrastructure co-ordination request and more.

It is an object of the present invention to provide a communication system and method of operating the same which reduces administrative work and frees up engineers' time to solve technical problems.

It is an object of the present invention to provide a communication system and method of operating the same that enables tracking, measuring and (multi-dimensional) reporting on all data.

The above objectives are accomplished by a computer based system for management of communications between a communications centre or more generally an operational relationship management centre and at least a first and a second entity associated with the provision or assurance of services especially telecommunications services is described, the first and second entities and the communications centre or operational relationship management centre being linked for communication purposes by a wide area network, local area network or any other form of connectivity, EAI or B2B integration, the communications centre or operational relationship management centre being for central control of structured communications between the at least first and second entities, the communications centre or operational relationship management centre comprising:
first memory means for storing information relating to concrete objects associated with the provision of a service especially a telecommunications service and under control of at least one of the entities, or default information relating to an unknown object,
second memory means for storing information defining predefined communication processes or business processes allowed by the communications centre or operational relationship management centre, each communication process or business process comprising an exchange of at least one message from the first entity to the second entity via the communications centre or operational relationship management centre or vice versa,
means for providing the first or second entity with access to one of the predefined communication processes or business processes,
means for allowing the first or second entity to associate a concrete object or an unknown object with the communication process or business process, and
tracking means for tracking the progress of the communication process or business process between the first and second entities.

The first memory means may also store an association between each object and one of the first and second entities. The operational relationship management centre may comprising third memory means to store a record of each message. The operational relationship management centre may comprise fourth memory means for storing profile information relating to the first and second entities. The operational relationship management centre may comprise means for allowing the first and second entities to enter the profile information into the fourth memory means.

The system may comprise at least one interface between the operational relationship management centre and a wide area network which allows the first and second entities to download profile information into the fourth memory means. The first and second entities may have an organisational structure comprising organisational units, further comprising a fifth memory means to store information relating to the organisational structure of each of the first and second entities.

The system may comprise means for notifying the first and second entities of messages. The system may comprise means for integrating existing computer systems from first and second entities. The tracking means may include a timer and means to initiate a communication event if a time measured by the timer after the last message in a Business process exceeds a threshold value.

The means for providing the first or second entity with access to one of the predefined Business processes, may comprise means to allow the first or second entity to structure a Business process by associating an organisational unit of the first or second entity with the Business process.

The present invention may also comprise a computer based operational relationship management centre for management of communications with at least a first and a second entity associated with the provision of telecommunications services, the first and second entities and the operational relationship management centre being adapted for communication purposes via a wide area network, the operational relationship management centre being for central control of structured communications between the at least first and second entities, the operational relationship management centre comprising:
first memory means for storing information relating to concrete objects associated with the lifecycle management of service and/or goods and under control of at least one of the entities, or default information relating to an unknown object,
second memory means for storing information defining predefined Business processes allowed by the operational relationship management centre, each Business process comprising an exchange of at least one message from the first entity to the second entity via the operational relationship management centre or vice versa,
means for providing the first or second entity with access to one of the predefined Business processes,
means for allowing the first or second entity to associate a concrete object or an unknown object with the Business process, and
tracking means for tracking the progress by means of an evidence trail of the Business process between the first and second entities.

The first memory means may also store an association between each object and one of the first and second entities. The operational relationship management centre may comprise third memory means to store a record of each message.

The operational relationship management centre may comprise fourth memory means for storing profile information relating to the first and second entities. The operational relationship management centre may comprise means for allowing the first and second entities to enter the profile information into the fourth memory means.

The operational relationship management centre may comprise at least one interface between the operational relationship management centre and a wide area network which allows the first and second entities to download profile information into the fourth memory means. The first and second entities may have an organisational structure comprising organisational units, further comprising a fifth memory means to store information relating to the organisational structure of each of the first and second entities. The operational relationship management centre may further comprise means for notifying the first and second entities of messages.

The tracking means may include a timer and means to initiate a communication event if a time measured by the timer after the last message in a Business process exceeds a threshold value. The means for providing the first or second entity with access to one of the predefined Business processes, may comprise means to allow the first or second entity to structure a Business process by associating an organisational unit of the first or second entity with the Business process.

In the system or centre described above a process may comprise at least one of the following:
determining status: controlled process of notification of situation
an escalation: uncontrolled process of notification by increasing level
a fault notification: pro-active or re-active notification of a problem
a request for quote and order: negotiation process preceding provisioning tracking provisioning tracking: request to rent a line
a request for site or premises access: all parties involved have to authorise the access co-ordination of planned activities: co-ordination of impact of works
co-ordination of infrastructure works: co-ordination of planned infrastructure works to multiple parties.

These and other features and advantages of the present invention will become apparent from the following detailed description, taken in conjunction with the accompanying drawings, which illustrate, by way of example, the principles of the invention.

The present invention will now be described with reference to the following drawings.

### Brief description of the drawings

Figs. 1a and 1b are schematic representations of operational relationships between actors in the provision of telecommunications services.
Fig. 2 is a schematic block diagram of an operational relationship management system in accordance with an embodiment of the present invention.
Fig. 3 is schematic representation of an operational communication in accordance with the present invention.
Fig. 4 is a schematic representation of a communication process or business process in accordance with the present invention.
Fig. 5 is a schematic representation of arrangements of a communication centre and other entities in an operational relationship management system in accordance with embodiments of the present invention.
Fig. 6 is a flow diagram of setting up a communication process or business process in accordance with an embodiment of the present invention.
Fig. 7 is a schematic diagram of the steps in a process in accordance with an embodiment of the present invention.
Figs. 8 to 16 are screen shots of a graphic user interface in accordance with an embodiment of the present invention.
Fig. 17 is a schematic representation of an operational relationship management system suitable for implementing the present invention.
Fig. 18 is a schematic representation of an operational relationship management system in accordance with an embodiment of the present invention being an alternative representation of Fig. 2.
Fig. 19 is an example of a communication flow which can be used with the present invention.
Fig. 20 is a tagged language scheme for a communication flow in accordance with an embodiment of the present invention.
Fig. 21 is an example of a tagged language scheme in accordance with an embodiment of the present invention.

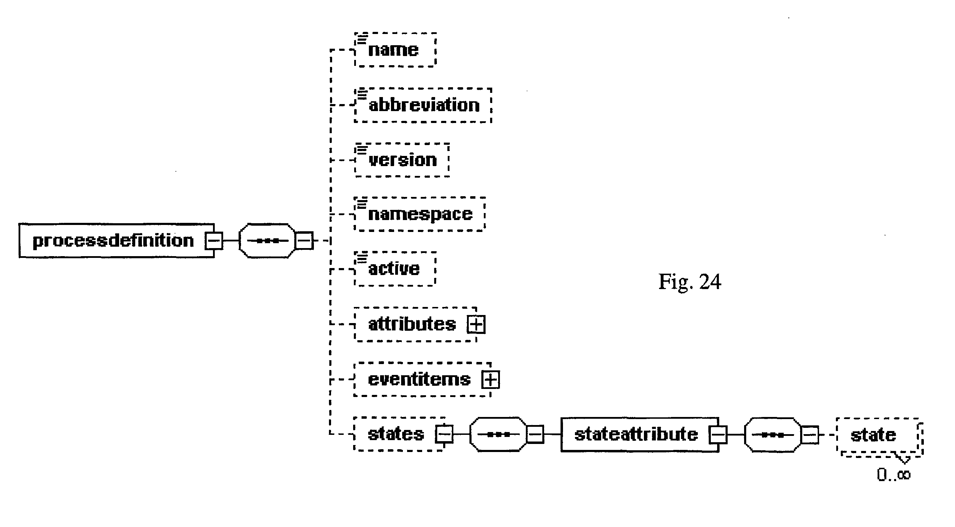

Figs. 22 - 24 is show details of the tagged language scheme for a communication flow of Fig. 20.
Fig. 25 is a tagged language scheme for an object in accordance with an embodiment of the present invention.
Figs. 26 and 27 show details of the tagged language scheme for an object of Fig. 25.

### Description of the illustrative embodiments

The present invention will be described with respect to a particular embodiment and with reference to certain drawings but the invention is not limited thereto but only by the claims. The drawings described are only schematic and are non-limiting. According to the embodiment, the system of the present invention can be used in a telecommunications environment or in any area with similar needs. However, the invention is not limited to this application, it can also be used e.g. for ICT or power operations entities, or for general use in co-ordinating activities between companies, e.g. in supply chain management.

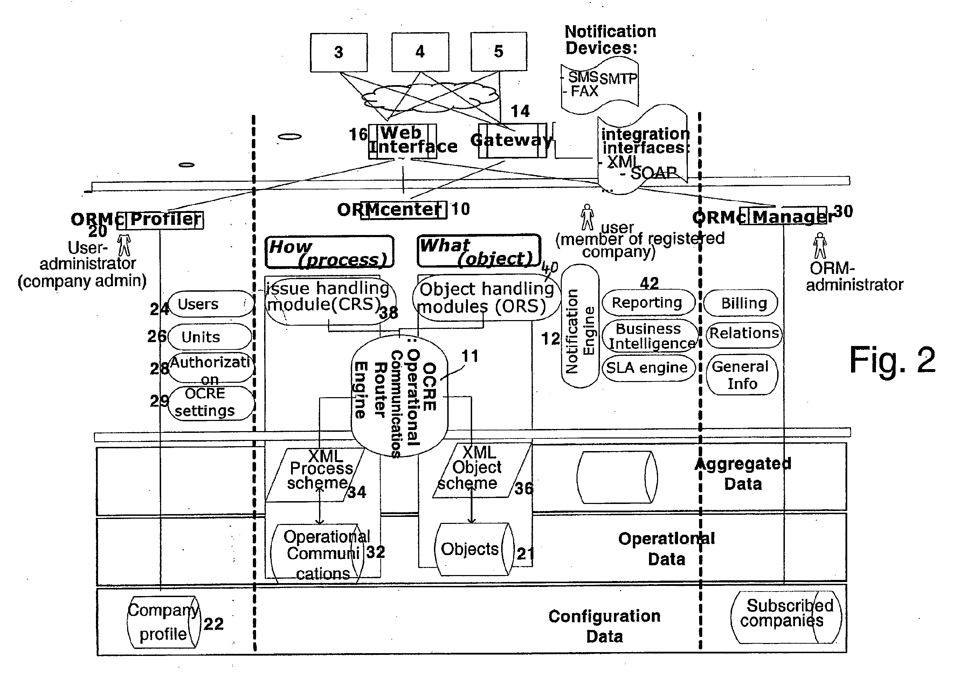

Fig. 2 illustrates a system overview of a system including an operational relationship management centre 10 according to an embodiment of the present invention. At the heart of the system is an operational communications router engine (OCRE) 11 which communicates with a plurality of actors 3-5 such as service providers and/or users, via a notification engine 12 and a gateway 14 via communication pathways 2. The notification engine 12 may use any suitable communication technique such as fax, Short Message Service (SMS) of a mobile telephone system, SMTP or similar. Generally, all these means of communications between actors make use of a connectivity service such as a wide area network such as the Internet, a public telephone system such as a landline or mobile telephone network, a microwave or satellite link, or a local telecommunications network such as a Local Area Network (LAN). Various formats for communication can be used, e.g. XML or SOAP. In addition to the gateway 14, the OCRE 11 may be accessed via a variety of other interfaces, e.g. a wide area network interface such as an Internet interface 16, or a Local Area Network interface. An Internet interface 16 is particularly useful to make an access to the system by the actors 3-5 via the Internet 1 whereas the gateway 14 is particularly useful for dedicated communications between the actors once the access has been made.

The purpose of the OCRE 11 is to organise communications between at least two of the actors 3-5. These communications should be controlled and supervised by the operational relationship system 10. The operational relationship system 10 of the present invention creates a collaborative platform that centralises and organises communication between actors within the telecom universe. This enables a more efficient communication among all parties involved.

A large amount of the communication among telecom-actors can be identified in clearly defined processes. These communicational processes have their own characteristics and process-flows. In one aspect of the present invention the system of the present invention streamlines these communications via a web-application. Preferably the web interface 16 has its own URL.

The customers of the system of the present invention are typically telecom operators, process providers, suppliers, subcontractors, resellers, etc. All these actors can have a different role (provider (supplier) or reseller (user)) within different communications. In the described embodiment, the system is not oriented to end-users (non-telecom companies), but the system can be extended to such end-users. Each kind of communication referenced in the system of the present invention concerns an operational relation. This link between two parties is the fundament for all processes within the system of the present invention. An operational relation can only exist between two well-defined parties that are subscribed into the system. The present invention allows that within the operational relation, the business partners do not use the same interface, i.e. one might use a webinterface, while the other is part of the relation using an SMTP, fax, SMS, XML, SOAP or any other communication protocol, MIME format and/or bearer service, and that they have different representations of the same operational communication, i.e. representation of the process flow, representation of the object within the operational communication.

Subscribed companies are able to request a relation with another company, either registered or not. This request is received by a system-administrator who takes up action to establish this relation.

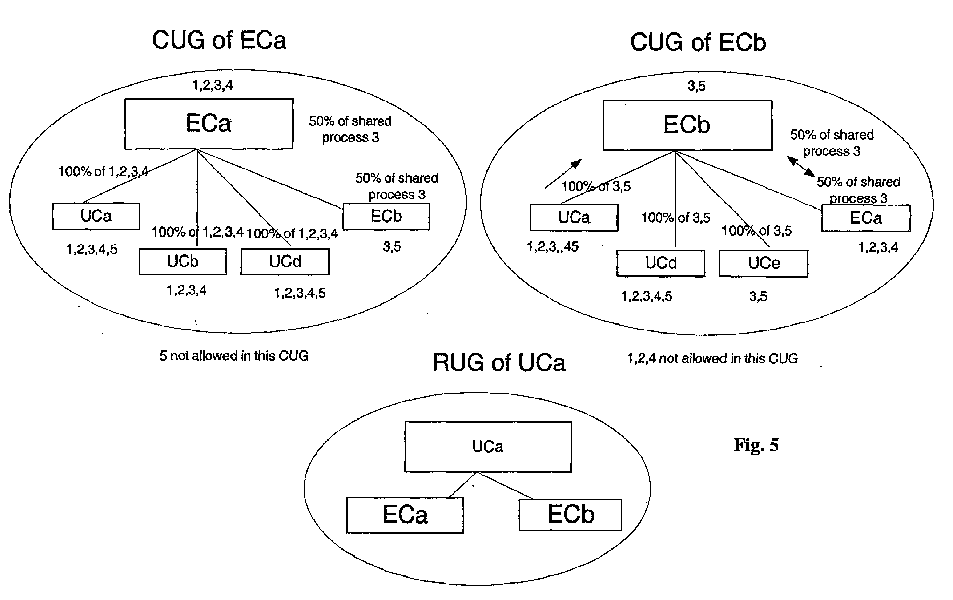

Within an established operational relation the role (reseller or provider) of each party is not fixed. The role depends on the operational communication. For each subscribed company, the collection of all its operational relations is called a user group. There are at least two types of user groups (see Fig. 5):
- closed user group: a closed user group is the collection of all parties linked to one system enabled company (EC). In this set of related companies there can be EC's and system user companies (UC's).
- reverse user group: a reverse user group is the collection of all parties linked to one system user company (UC). In this kind of set of companies there can only be EC's, because operational relations can only be established on request of an EC. In result of this principle, UC's can only have relations with EC's.
Within the telecom industry, a vast majority of the communication can be brought together into similar topics. Within the present invention, but not limited thereto, eight communication topics have been identified and organised and streamlined in processes. These processes are:
- status: controlled process of notification of situation
- escalation: uncontrolled process of notification by increasing level
- fault notification: pro-active or re-active notification of a problem
- request for quote and order: negotiation process preceding provisioning t racking
- provisioning tracking: request to rent a line
- site or premises access: all parties involved have to authorise the access
- co-ordination of planned activities: co-ordination of impact of works
   - co-ordination of infrastructure works: co-ordination of planned infrastructure works to multiple parties

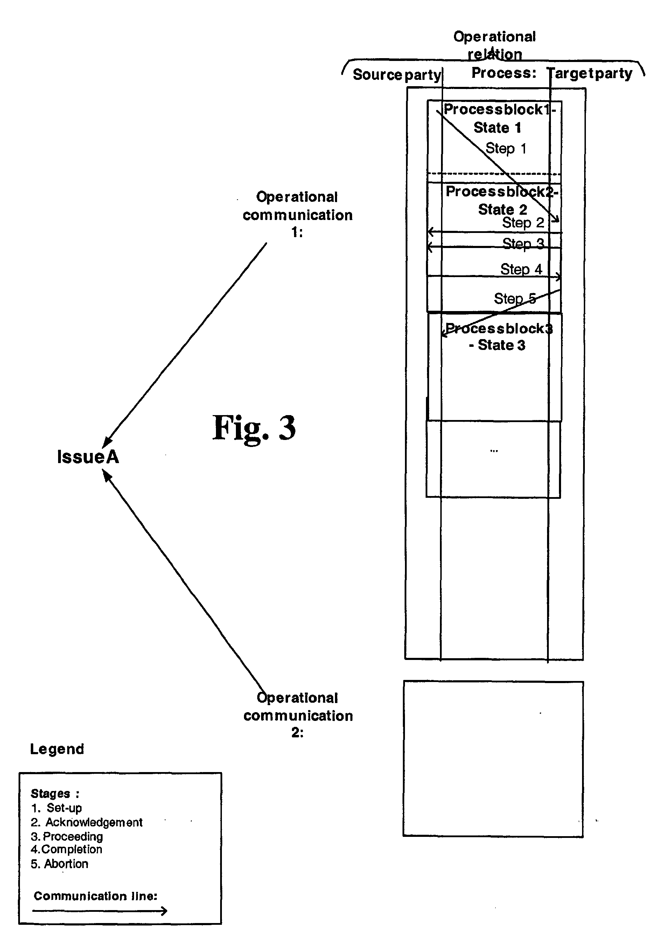

As shown schematically in Fig. 3 communications between a source party and a target party define an operational relationship which is executed by means of a process. Each process is divided into several process blocks, and each process block is characterised by a state and comprises a number of communication steps. Within each process block (and related to that particular state) there can be at least two kinds of events:
- user actions; which are triggered by the source or target party
- business rules events; which are triggered automatically by the business logic controlling the communication process or business process. This control can be time dependent, state dependent or workflow dependent, for example.

An operational communication is a fundamental concept of the system of the present invention and is shown schematically in Fig. 3. It identifies one instance of a process within one operational relation. Events can change the state of the operational communication. An operational communication transfers to a next process block belonging to the next state. The next process block is not fixed: the system determines, depending on the event, the state to which the operational communication is to go. That is, the next process block may be one of several possible process blocks whose selection depends upon the outcome of the preceding communications.

On the other hand, not all events impact the state of the operational communication. As such it is clear that there can be multiple events within one process block. Every event causes a step within the operational communication. A step has a source and a target party and is always linked to a state.

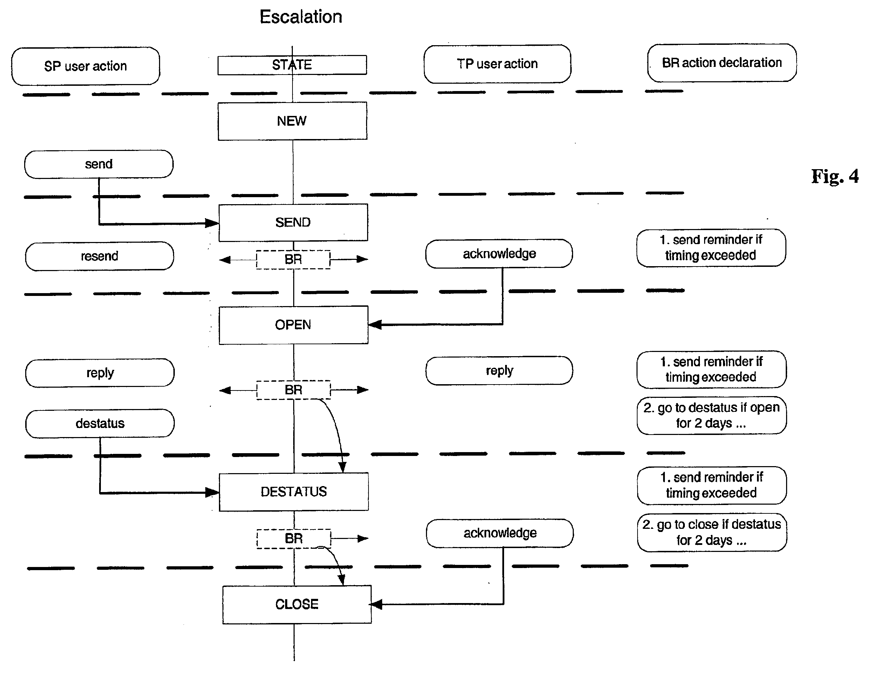

A process example is shown schematically in Fig. 4. Every operational communication starts at a "New"-state and ends at the "Close"-state. Within each operational communication, a general, state-independent, business rule can also change the state of he process. Hence, a step can be triggered by a source party (SP) action, a target party (TP) action or by operation of a business rule (BR). Referring to Fig. 4 a new process is created by sending the appropriate communication from the SP to the TP. If there is no response from the TP within a predefined time a business rule will be implemented by the system to take an appropriate action, e.g. resend the same message. Once an acknowledgement has been sent by the TP, the process is in an "open" state. In the open state various messages can be sent/exchanged. At any time a business rule may be implemented, e.g. initiating the sending of a reminder if a certain time has elapsed without reply. Another business rule may be to start the process of closing the process by the communication flow entering a destatus state. This may be triggered if the state has been open for too long e.g. open for two days without resolution. In the destatus state various options are available. Again business rules may determine the progression to a closed state, e.g. if there are no responses from the TP. Alternatively, a BR may initiate further reminders until the TP acknowledges that the process is complete. Then the process is closed. Within each state the exact nature of the communications can be freely selected by the parties. However, the communications must lead to resolution otherwise the business rules will determine the process flow. The business rules are provided to prevent a process being "forgotten", for example.

Most of the time, communications between telecom parties relate to concrete subjects. Within the present patent application, the notion of "objects" is used to identify these concrete objects which are associated with a provision of a telecommunications service. Every instance of an object is always linked to an object subtype and via the object subtype, the object type for this instance can be deducted. At least two kinds of object types have been identified of which the following table provides a few examples:

| Object type | Sub-type | Description |
|---|---|---|
| Site, geographical location with a function | POP | Point of presence |
| | Mobile infrastructure | Mobile mast |
| | Customer premises | Location at a customer site |
| Circuits, connection between two points | Leased line | "leaf" level of installed bases |
| | Circuits | Parent level of leased lines or circuits |

Each instance of an object has an owner, and is unique within the system environment. The operational system 10 records and assists in the maintenance of data relating to these objects. For example, returning to Fig. 2, digital data containers or databases or files storing data are provided to implement the system. Firstly, objects are stored in an objects database or digital data container 21. The OCRE 11 is in communication with the objects database 21. The objects are related to the companies and their networks. The objects cannot be known by the system in advance - the details thereof must be provided by the providers of telecommunications services. Each such company is defined in a company profile database or digital data container 22 as part of the operational profiling centre 20. The profiling centre communicates with the actors 3-5 via the interface 16 (or the gateway 14 if that is more convenient). The actors download the relevant information into the company profile database 22 via the interface 16 and the profiling centre 20. The objects database 21 is then created from the information which has been provided to the profile database 22 and further information can be downloaded via the interface 16 or the gateway 14. In addition certain default objects are also created such as an "unknown object" which may be used when the object of the target party cannot be identified or is otherwise unknown. Each actor is responsible for the accuracy of the data in the company profile database 22.

The operations profiling centre 20 also stores other relevant data. First of all it includes a database or digital data container 24 defining all the subscribers or authorised users of the system. A definition of all the organisational units of each subscriber (e.g. personnel units such as departments, or groups with special tasks such as fault tracing) is stored in a units database or digital data container 26. The necessary authorisations may be stored in an authorisations database or digital data container 28. A separate database or digital data container 29 stores information required by the OCRE 11, e.g. which devices (fax, etc.) may be used for communication with each user via the gateway.

Operational communications must be defined for the processes which are to be used. These operational communications definitions are stored in an OC database or digital data container 32. Database 32 is in communication with the OCRE 11 with respect to a specific process scheme 34. To assist it in the control of objects and issues, the OCRE 11 may have an issues handling module 38 and an object handling module 40. To allow management of the OCRE 11 a reporting module, for generating reports concerning the currently active processes as well as histories. These modules belong to tracking means of the OCRE 11.
In addition a Manager Module 30 is provided to determine and progress billing and other administrative or usage related information of the actors for the services which have been used.

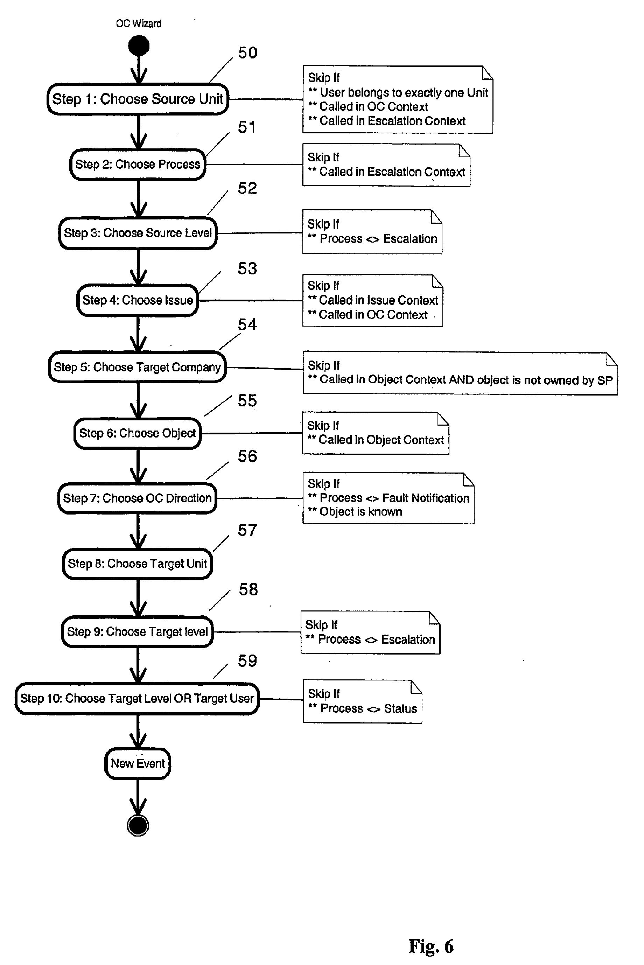

How a user sets up a process in the form of a "wizard" is shown schematically in Fig. 6. In step 50 the user selects its own source unit. The selection step may be omitted if there is only one unit for the source party, if the communication is already part of another operational communication or if the communication is part of an escalation event. In step 51 the relevant process is called. A list of processes is available as a drop-down menu. The step is skipped if the communication relates to an escalation. In step 52 the source level is selected, e.g. the level in the source hierarchical organisation which is to be used. The level in a hierarchical organisation may be modeled, so that, for example, if an escalation procedure is carried out a higher level in the hierarchy of the source party organisation may be selected in order to indicate that a higher level of management is now involved. In step 53 the issue is selected. This step is skipped if the communication was called in an issue or in an operational communication context. In step 54 the target company is selected from a drop-down menu. In step 55 the object is chosen. The object is chosen from a drop-down list which is relevant for the company selected in step 54. In step 56 the direction of communication is entered. This is used for statistical purposes - the direction provides information as to whether it relates to provider-user direction or vice-versa. In step 57 the target unit is selected. In accordance with an embodiment of the present invention this is selected by the system itself based on the previous information. System selection is preferred as then the chance of communications going to the wrong unit and having to be resend is reduced to a minimum. In step 58 the target party level may be optionally selected. The level in a hierarchical organisation may be modeled, so that, for example, if an escalation procedure is carried out a higher level in the hierarchy of the target party organisation may be selected. Finally, a new event is created in step 58 a new event is created.

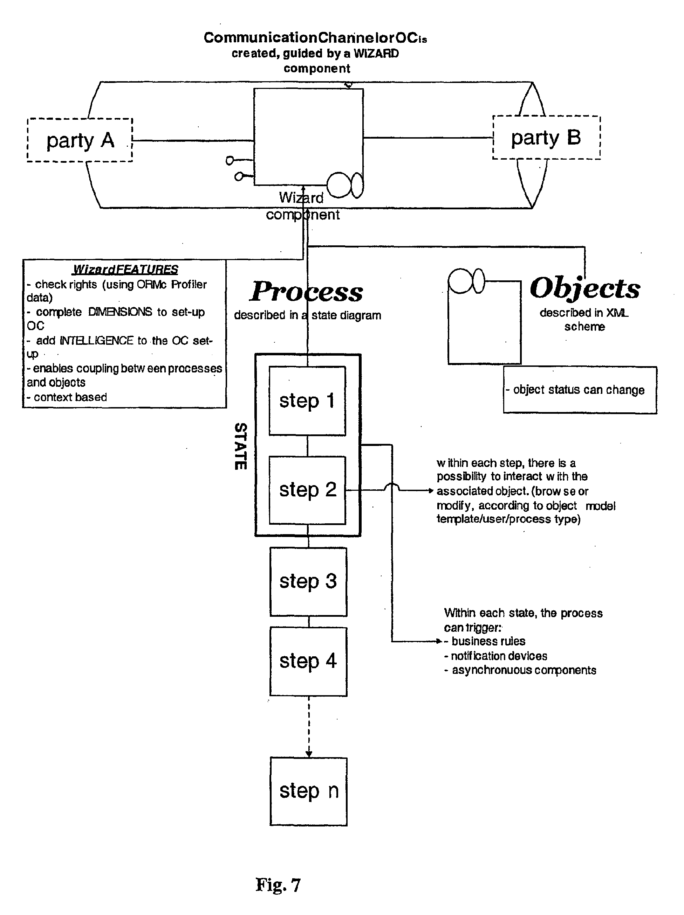

The use of the above wizard is shown schematically in Fig. 7. The aim of the operational communications centre or operational relationship management centre is to set up communications channels between at least two parties A, B guided by the above wizard. The channel uses organised and controlled processes and objects to complete the communication process or business process. A process can be visualised in the form of states, each process state comprising one or more communication steps. Within each step the possibility is provided to interact with the object associated with the process, e.g. browse or modify according to object model, template/user/process type. Within each state the process can trigger business rules, notification devices or asynchronous components, i.e. those which do occur at the same time, e.g. queuing of communications while they await transmission.

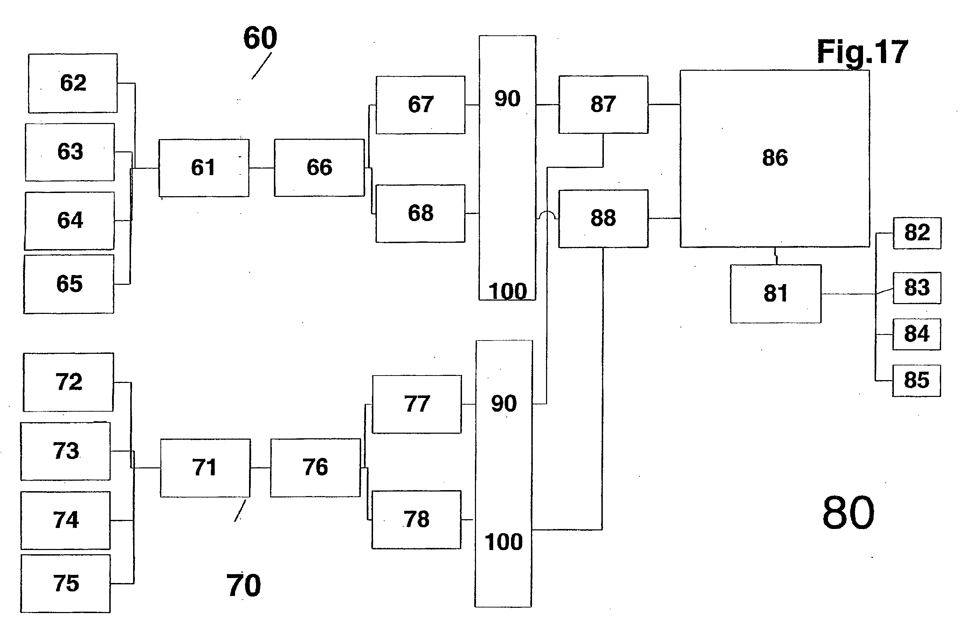

A schematic system in accordance with an embodiment of the present invention is shown in Fig. 17. This shows two organisations 60, 70 which are entities involved in the provision of telecommunications services and need to communicate with each other. This communication is carried out in a structured way through a communications management system 80 in accordance with the present invention. Each organisation 60, 70 has at least one central processing unit (CPU) 61, 71 such as a personal computer, PDA, terminal or workstation typically connected to a local or wide area network 66, 76. The CPU 61, 71 generally has access to local memory such as RAM (random access memory) as well as a microprocessor such as a Pentium IV processor supplied by Intel Corp. USA. Generally, a keyboard 62, 72 is provided for inputting data to the CPU 61, 71 as well as a display device 64, 74. Also a printer 63, 73 is generally provided. Non-volatile memory devices 65, 76 such as a hard drive or similar is generally provided for storing an operating system and a graphical interface such as Windows™ supplied by Microsoft Corp. USA as well as application programmes for running on the CPU 61, 71. For communications with other organisations suitable communications devices are provided, e.g. a modem 67, for connection to a telecommunications network such as a telephone network 90 and/or a router 68 for connection to a wide area network such as the Internet 100, each of these devices being connected to the CPU 61,71 directly or via the area network 66, 76. The communications management system 80 also comprises at least one central processing unit (CPU) 81 such as a personal computer, server, terminal or workstation typically connected to a local or wide area network 86. The CPU 81 generally has access to local memory such as RAM (random access memory) as well as a microprocessor such as a Pentium III processor supplied by Intel Corp. USA. Generally, a keyboard 82 is provided for inputting data to the CPU 81 as well as a display device 84. Also a printer 83 is generally provided. Non-volatile memory devices 86 such as a hard drive or similar is generally provided for storing an operating system and a graphical interface such as Windows™ supplied by Microsoft Corp. USA as well as application programmes for running on the CPU 81. Generally, software programmes will be installed on CPU 81 to implement the OCRE 11 in accordance with the present invention. CPU 81 may be implemented as a server. Also non-volatile memory device 86 stores all the databases or dogital data containers associated with the management system in accordance with the present invention as described above. For communications with other organisations suitable communications devices are provided, e.g. a modem 87, for connection to a telecommunications network such as a telephone network 90 and/or a router 88 for connection to a wide area network such as the Internet 100, each of these devices being connected to the CPU 81 directly or via the area network 86.

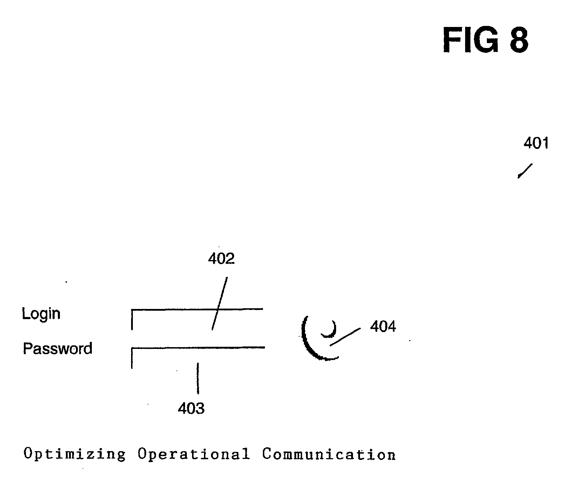

In typical operation of the system in accordance with the present invention items 38 (issue handling module), 40 (object handling module), 34 (process scheme database or digital data container) and 36 (object scheme database or digital data container) will be accessed during the course of communications, whereby the communications all go via the OCRE 11 as well as the appropriate gateways or interfaces. For example, when a user, seated at a computer hooked up to the internet, e.g. via a modem connection or via a LAN, wants to make use of the system of the present invention, he types in the URL of this system, and gets on his screen a login-screen 401 as shown in Fig. 8. To obtain this log-on screen a browser running on the computer accesses the interface 16 via the Internet and an Internet Services Provider. The user fills in a user name in box 402 and a password in box 403, and thereafter hits a go button 404. After verification of the username and password by the operational management centre 10, e.g. by the management centre accessing the authentications database or digital data container 28, the user is transmitted an html document which flashes up on the display 64, 74 of his computer, depending on his status.

There are different kinds of users: there is a system-administrator, there are user-administrators, and there are users. A system-administrator is a person from within the organising company providing the system of the present invention or from the subscribed company. A user-administrator is linked to a subscribed company. It is the "main user" for one particular company. With "main user" is meant that he/she has the right to enter all the information about his/her company, e.g. to the profile database 22, necessary for further access to the system. This system-administrator also has the right to create users for his/her company. Users are all persons having the right to access the system. Authentications for users are stored in the authorisation database 28 and the user database 24, respectively.

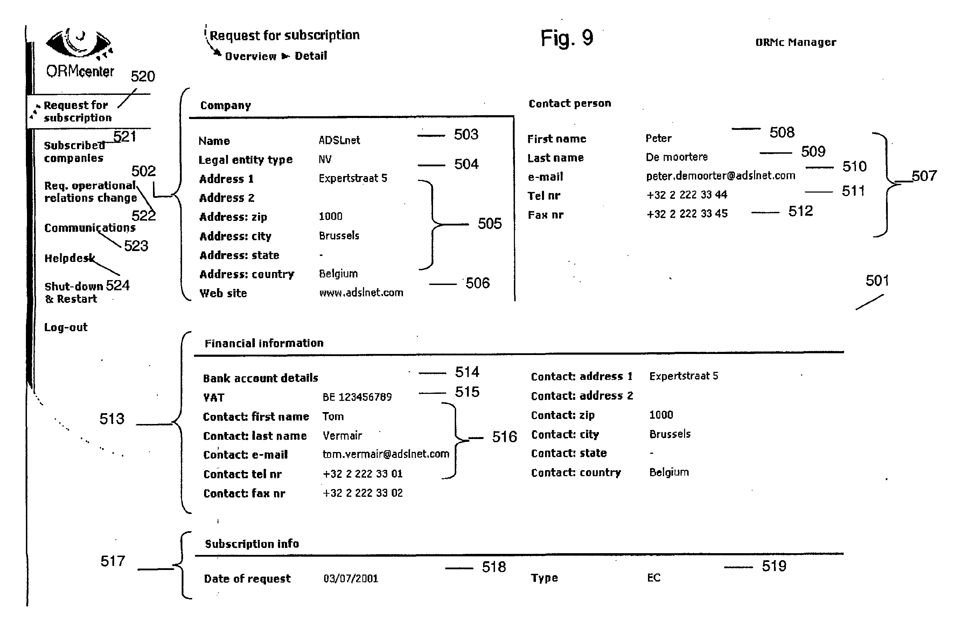

If the system-administrator is logging in, he/she gets a screen 501 flashing up on the display 84 of his/her computer, as shown in Fig. 9. This part of the system is called the MANAGER. It is a module of the system of the present invention for the subscription and maintenance of users and relations to subscribed companies.

The procedure of subscribing companies can be described as follows. A candidate user-company can enter an application form with some basic information via a public part of the web site 16 of the system of the present invention. This note is sent to the system-administrator, who will evaluate the application. The information filled in on the application form by the candidate user-company is automatically filled in on the screen 501. Alternatively, the system-administrator can manually create a new user-company in the MANAGER without application form.

The system-administrator can consult open applications from candidate companies by choosing button 520 on his/her screen. Selection of one record opens an application form. If a request for subscription is handled by the system-administrator, he/she has to fill in a number of fields, such as the company details 502 of the subscribing company (company name 503, legal entity type 504, address 505, company web site 506), the contact person details 507 for the subscribing company (first name 508, last name 509, e-mail address 510, telephone number 511, fax number 512), the financial information 513 of the subscribing company (bank account details 514, VAT number 515, financial contact person details 516) and subscription information 517 (date of request 518 and status of the subscribing company 519). The status of the subscribing company can either be EC (system enabled company), which means that the subscribed company will be authorised to use all features of the system, or UC (system user company), which means that the subscribed company will be more restricted in using the system. For example, an EC-subscription may be a charged subscription, while a UC-subscription may use the system free of charge.

The system-administrator can also consult and/or maintain a list of subscribed companies, by clicking button 521 on his/her screen. Selection of a company concerned out of a list of all subscribed companies makes the following topics available:
- overall administrative information (name, contact, user-administrator, EC/UC level): can be modified
- billing information: can be visualised only; this information is calculated on the basis of available information in the system database or digital data container
- user group (closed or reverse): gives a list of operational relations; creation, modification and deletion is possible
- process subscription: for every operational relation, some process is active.

Creation, modification and deletion of links is possible
By clicking on button 522, requests concerning operational relations can be consulted. This results in a list of all open requests being given. Items in the list can be selected and accepted or rejected.

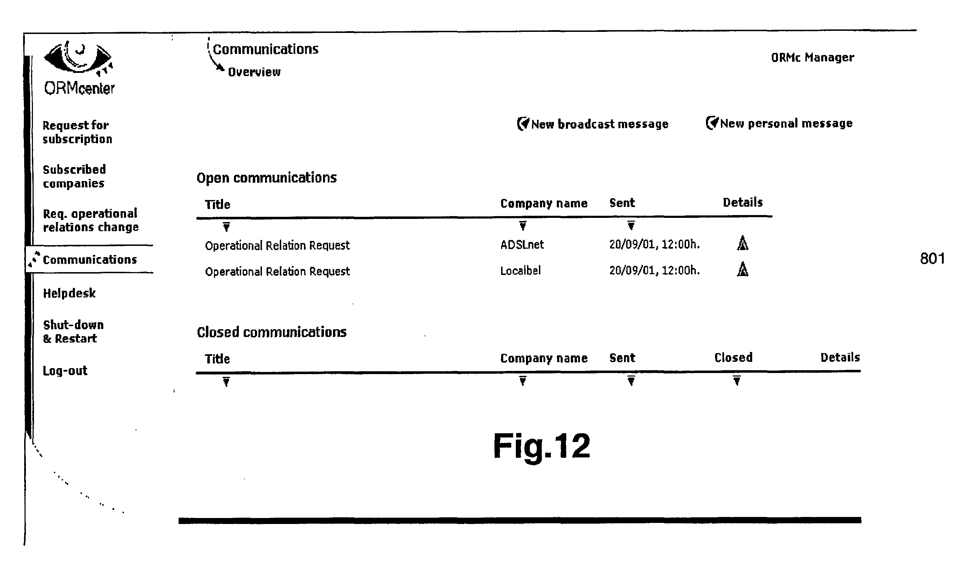

Clicking on button 523 results in a screen 801 as shown in Fig. 12, with a choice to be made to either send a message to external e-mail of users (e.g. confirmation of registration), or to send a message to PROFILER (see later) (e.g. confirmation of an established relation, planned shut-down of the system, etc.).

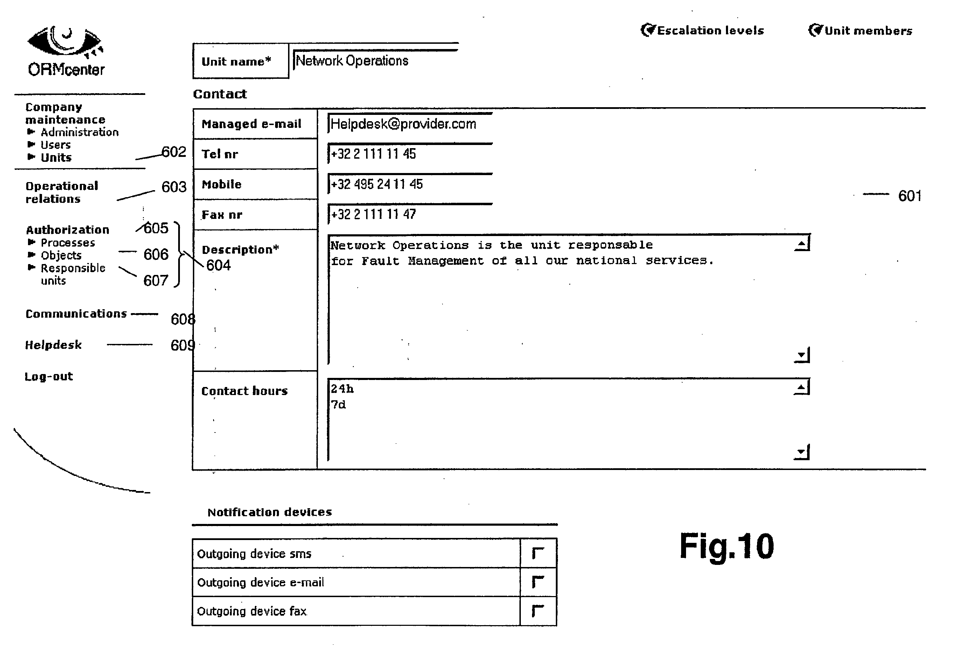

By clicking on button 524 a simplified mail-tool is started up, where the system-administrator can respond to questions sent by the user-administrators.
If a user-administrator is logging in, he/she gets a screen 601 flashing up on the display 64, 74 of his/her computer, as shown in Fig. 10. This part of the system is called the PROFILER. This is a data-entry module for all structural business information by the user-administrator. This information will go to at least the company profile database 22. The PROFILER allows the creation and maintenance of all information needed for the proper use of the system of the present invention. It contains all the conFiguration data for the involved company needed for operational communication. The user-administrator can change details concerning the subscribed company he/she is working for. One user-administrator per company can enter and maintain all structural information for the subscribed company, so that there is a single point of contact (SPOC) for each company. By clicking on button 602, the user-administrator can do maintenance of company data. By clicking on button 603, the user-administrator can consult a closed user-group: he/she gets a list of all operational relations for the company.

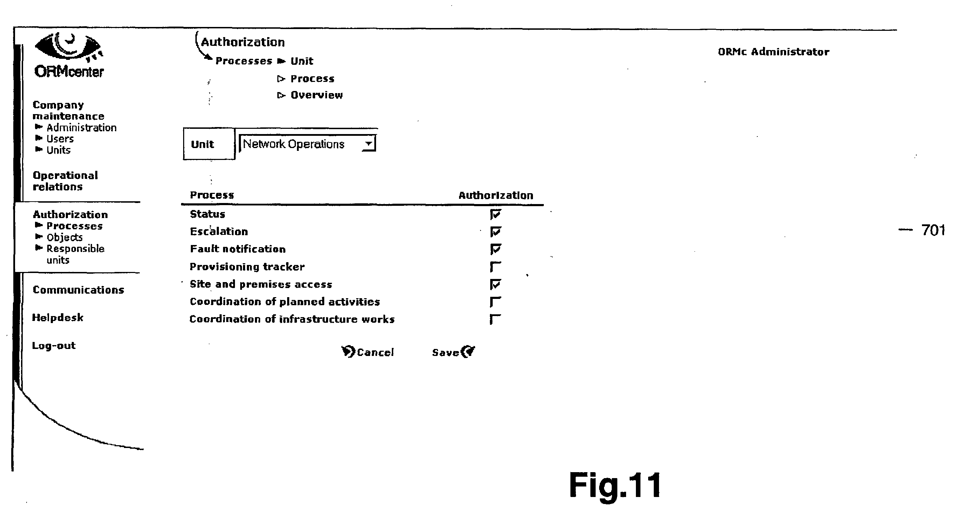

When clicking on button 604, there can be chosen for processes 605, objects 606 or responsible units 607. Clicking button 604 allows to define and maintain rights. By choosing processes 605, a screen 701 as shown in Fig. 11 appears on the display. It allows to define access-rights. This results in a matrix where the user-administrator defines whether a unit has the right to access a process or not, e.g. to the issue handling module 38. Choosing objects 606 allows to manage rights (hide/read/write) to the object handling module 40. This results in a matrix where the user-administrator defines for every object-subtype the rights for every unit. Choosing responsible units 607 allows to define a responsible party for each object subtype and for each process. This rights-definition will enable the system within operational communications to provide the target party depending on the object of the communication.

Clicking on the communications button 608 allows to send a message to the MANAGER, to receive internal messages sent by the system-administrator, or to fill in a request-form for operational relations.

Clicking the helpdesk button 609 allows to send and receive messages concerning the system of the present invention. The user-administrator can send questions concerning the system to the system-administrator. The system-administrator can answer these questions within this helpdesk function (by clicking on his button 524); this response will be received by the user-administrator in the present helpdesk function visualised by clicking button 609.

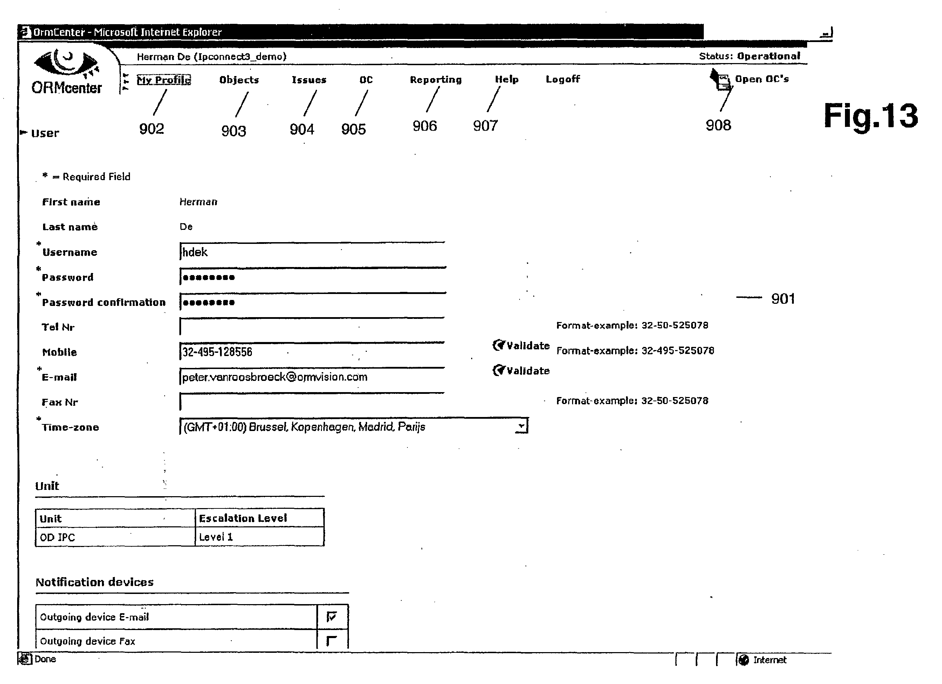

If a user is logging in, he/she gets a screen flashing up on the display 64, 74 of his/her computer, which is part of the PORTAL, the entry block for all company-users. It contains links to all process modules and a view on the active operational communications. Those links are given in the top of Fig. 13.

By clicking button 902, a screen 901 as shown in Fig. 13 opens. The user can update his personal information. At initialisation of units, users, ... within the PROFILER, the user-administrator will put default values for the contact-information of the user. With the system of the present invention, every user is able to maintain his profile. Every user has access to its own user information.

Button 903 is only available to a user when he/she is authorised. The object-handling module authorises users to administer (create, modify, cancel, consult) objects. The user-rights for this module are administered within the PROFILER by the user-administrator. The main actions within the object-handling module are logged and time-stamped: creation, last modification.

Button 904 is only available to a user when he/she is authorised to at least one process. Access to the issue-handling module 38 depends on the rights defined for the operational communication and processes in database 29. The issue-handling module 38 is the module supporting the organisation of operational communications. Each operational communication will be linked to an issue (existing or new issue). Users are able to link several issues to each other. This facilitates the querying of communication. It is up to the users to enter and to maintain the issues.

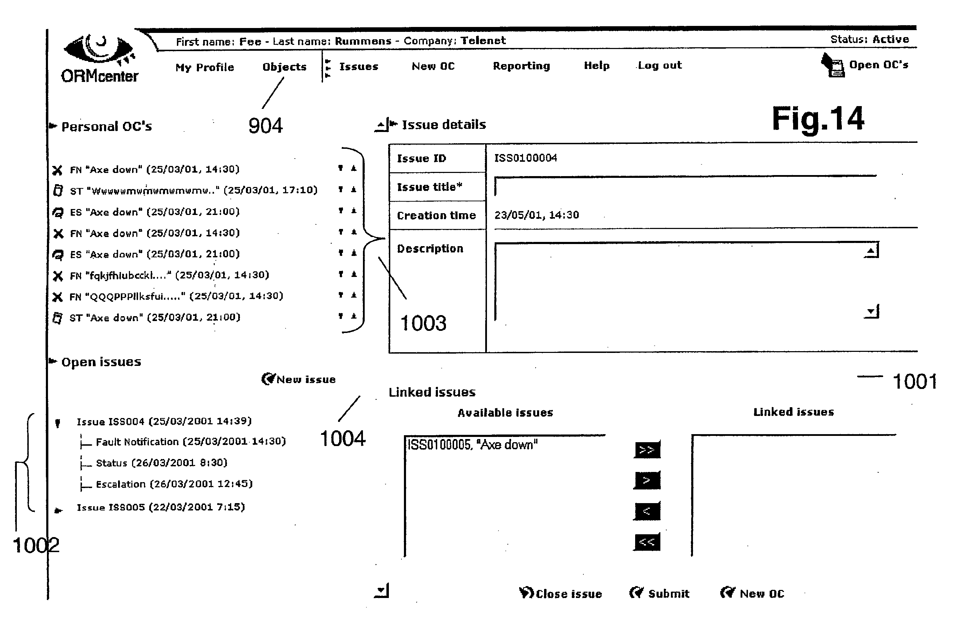

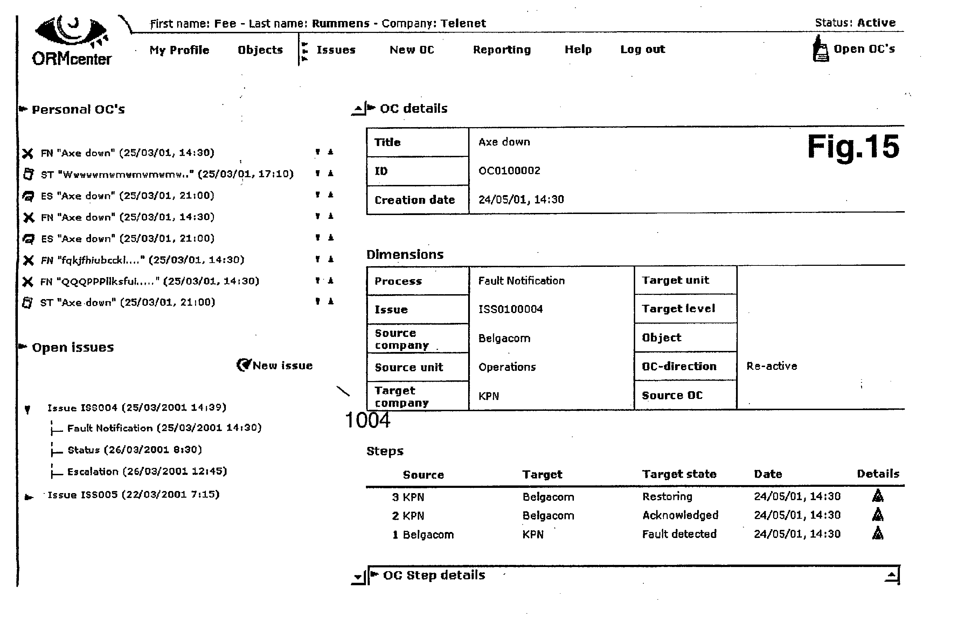

When button 904 has been clicked, a list of issues where the party is source party of member from is displayed for administration or modification. It is used for selection and follow-up of operational communications for one concrete issue. From the issue-handling module 38, the user will be able to select one particular issue 1002 (where he is member from) and view all operational relations 1003 within this issue, as for example shown in Fig. 14. On selection of an operational communication, as shown in Fig. 15, the user will be able to proceed within this operational communication. A new issue can be created by clicking button 1004. Modification of an issue is not possible if it is already linked to an operational communication, except for a linking action. Every member can link his/her issues to other issues. Closure of issues is only possible if the issue is not linked to any operational communication (the user is the only owner and member). A user can view closed issues in the reporting module, by clicking button 906.

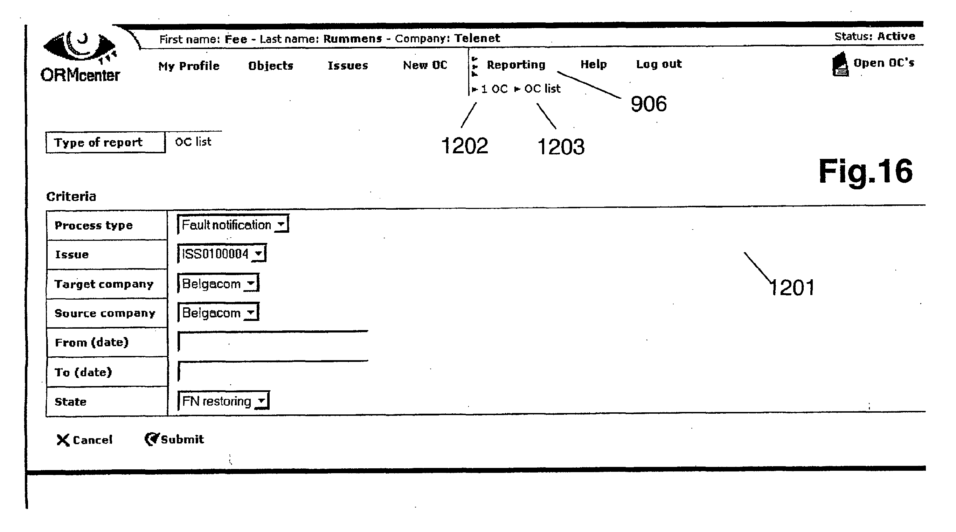

When clicking button 906, the user can choose whether he wants a report for one operational communication, or a list of operational communications, by either clicking button 1202 or button 1203. This accesses the reporting module 42. When clicking button 1203, a screen 1201 as shown in Fig. 16 is shown.

By clicking button 908, the user can consult active operational communications. He/she gets a list with all operational communications which have not achieved the "closed" state.

By clicking button 905 the user can select an new operational communication. Button 907 provides access to on-line help. Clicking on button 908 provides an overview, e.g. all open (current) operational communications can be seen with relevant information, e.g. status, title, process, etc.

The core of the above application is built around a number of tagged language definition sets. In particular the tagged language definition sets of the objects and the processes provide templates for carrying out any process. At the core of the application, the OCRE 11, interprets these tagged language files and comprises means to:
- define the complete appearance of the application entities
- define the behavior of the application entities
- define the integration capabilities
- define the general functionality (print, search)
- define the relation towards external notification devices (SMS, fax, mail).
The application orchestrates pay-loaded communications between two or more entities connected to the platform. By pay-load is meant that the communications refer to physical changes to physical systems, e.g. repair of a fault, manufacture of an item, purchase of equipment. An object relates to the intended result of a process and an object is associated with one or more processes. For example, if a fault is to repaired this is an object and a process is defined and made available from the relevant process object database for carrying out the fault repair. Hence, processes and objects are associated in such a way that the process can be completed satisfactorily. The tagged language definition sets not only the object but also any relevant process. The tagged language definition sets are stored in a suitable digital data container or database in the form of a library for retrieval by the OCRE 11.

The communicating entities can be human and/or system actors that are connected to the system through native user interface or through any form of system integration or any combination of these. Each communication is defined as a sequence of milestone driven activities. Each activity is closely interlinked with a payload embedded within the communication flow. This is called the collaborative interlinking between the communication flow and the object, whereas the content, appearance and role setting around this object will be depending on the status and role setting of the overlying communication flow. An example is an entity that sends a request for repair to another entity. Doing so was the result of the interpretation of a definition set that imposed the object in the communication flow to be filled in with certain, in some case pre-defined, content. As the communication reaches the other entity, this entity will be able to see the communication, the evidence trail that the communication has created and the associated object. This entity can now, based upon the communication flow related tagged language definition set, execute the next step in the communication flow. The options to take the next step are completely defined by this tagged language definition set. Also here this next step will be interlinked with a definition that is related to the object, i.e. the next step cannot be taken without having mandatory filled in content in the object of the communication. This manner the communication flow is continued until the communication flow reaches an end state.

Not only the communication flow, but also the payload, hereafter referred to as the object of the communication flow and the responsibility sets are defined in a tagged language, for example a language derived from SGML, especially XML.

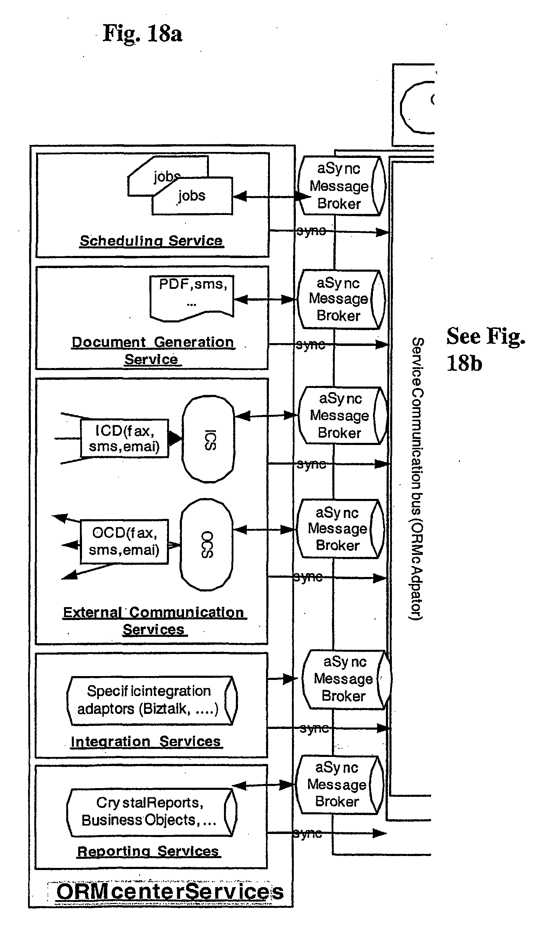

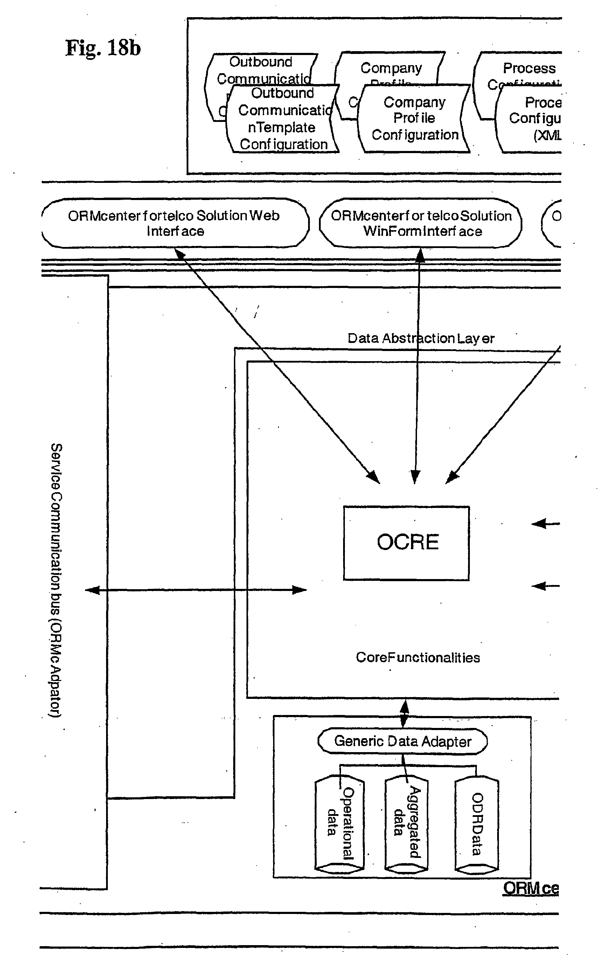

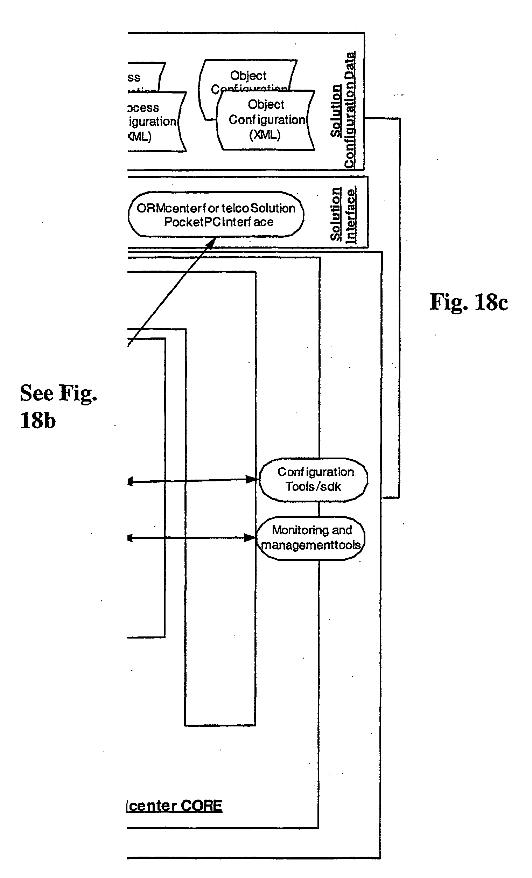

The system can conceptually be represented by a conceptual model as shown in Fig. 18. It will be appreciated that Fig. 18 is an alternative view consistent with Fig. 2. The conceptual model indicates the central role of the OCRE 11. OCRE comprises a tagged language interpreter for manipulating tagged language data sets. In addition abstraction layers are provided to underlying data sets and to external configuration, user interface and external device environments. The OCRE 11 has access to aggregated data, configuration data and operational data as indicated in Fig. 2. Further, configuration tools are provided for configuring company profile, communication templates, processes and objects. OCRE 11 generates reports with report module 42 which can be viewed internally or by any of the actors.

The application has a segmented architecture where all communication with external services can be done through asynchronous mechanisms and through a number of transport, connection and adaptor technologies, i.e. XML, SOAP, http, SMTP, etc... This communication is moderated by asynchronous message brokers which channel messages via the interfaces such as webinterface 16 or the gateway 14.

On the horizontal plane, the first tier is the UI (User Interface) layer where all interfacing to any actor is dealt with. The second layer is the core application where all intelligence and logic is situated. The third layer is the database or digital data container layer where the database model is held.

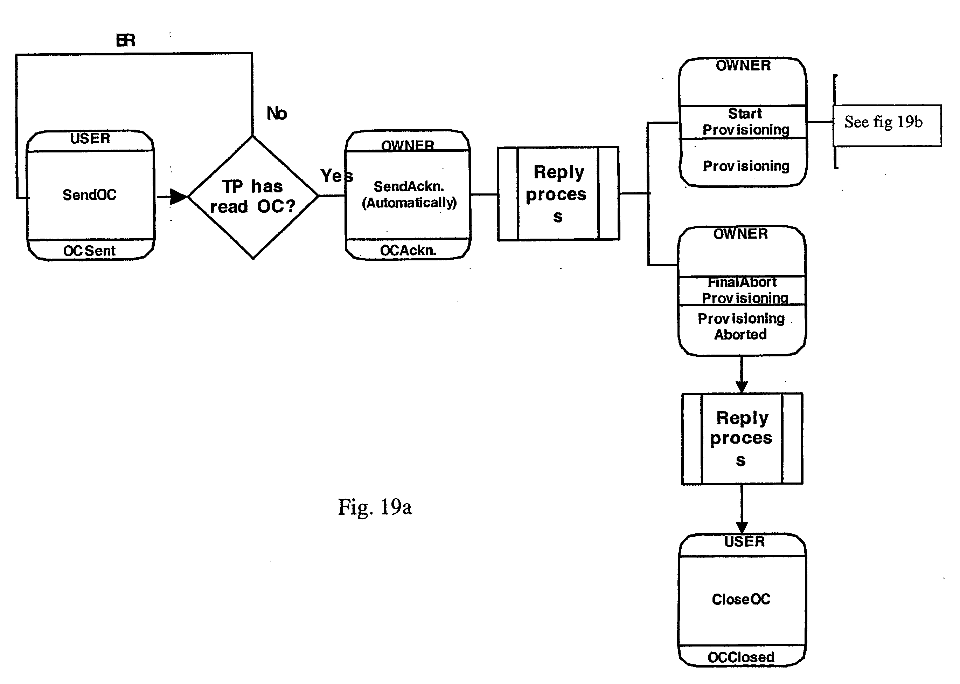

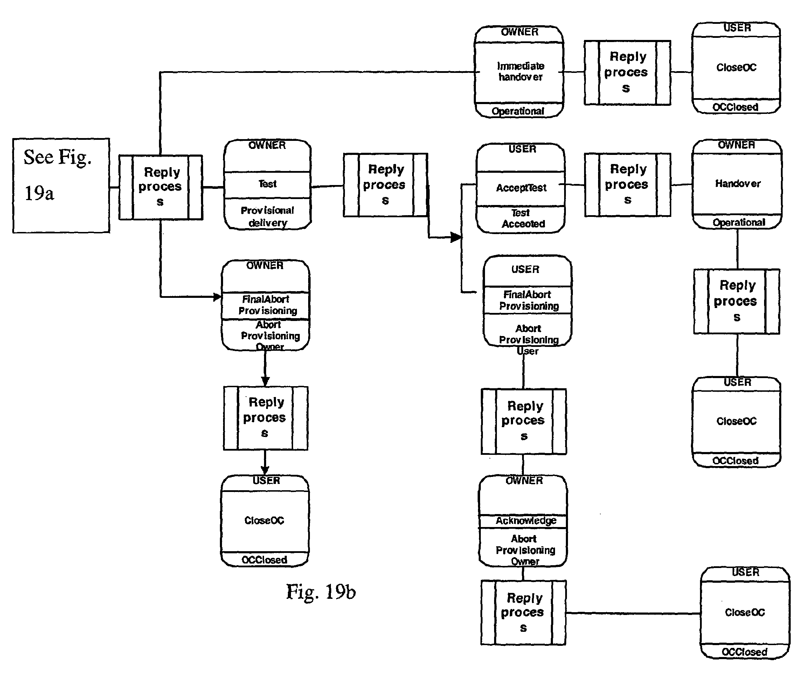

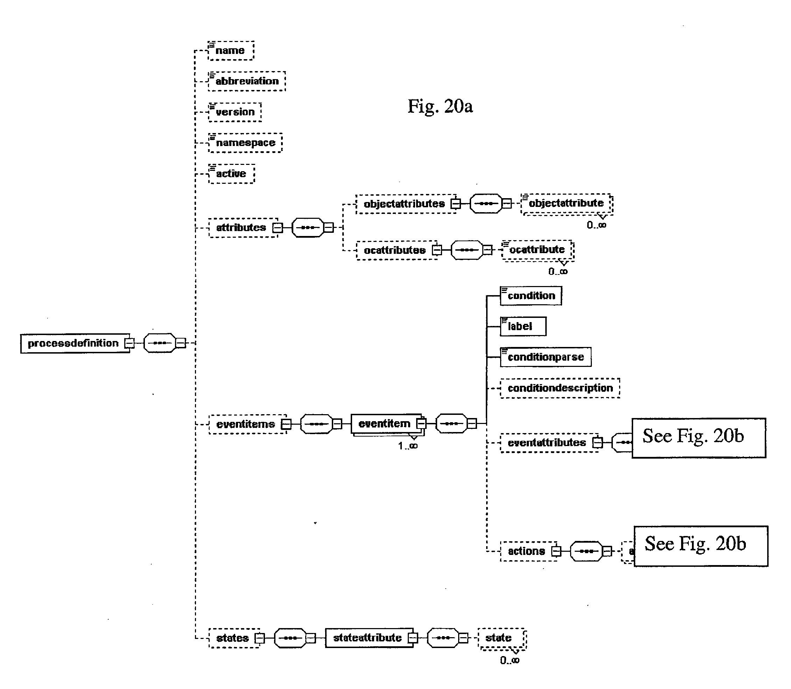

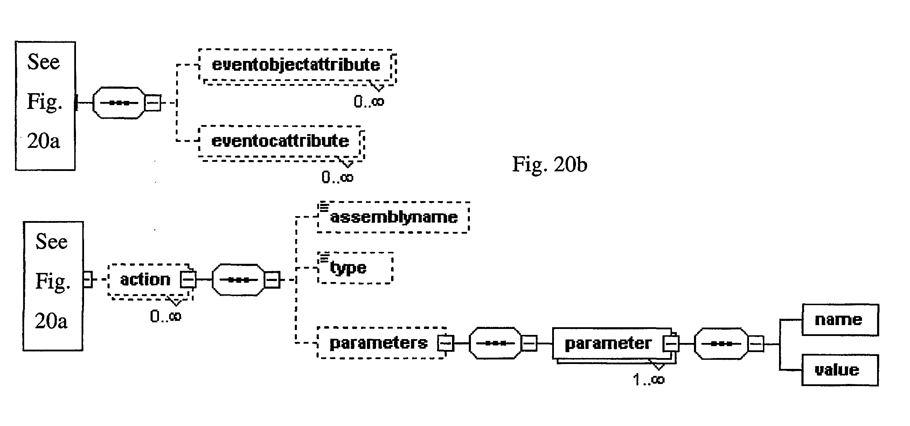

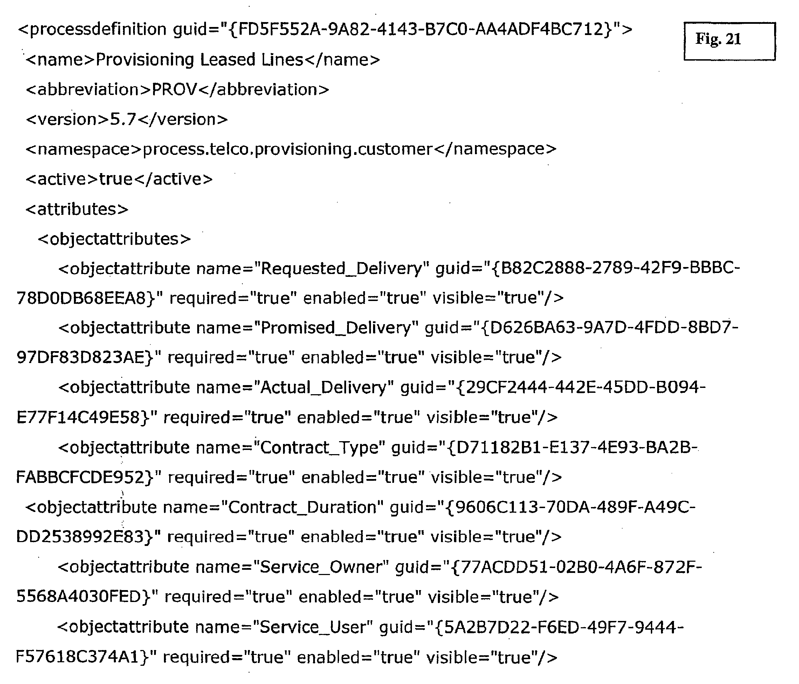

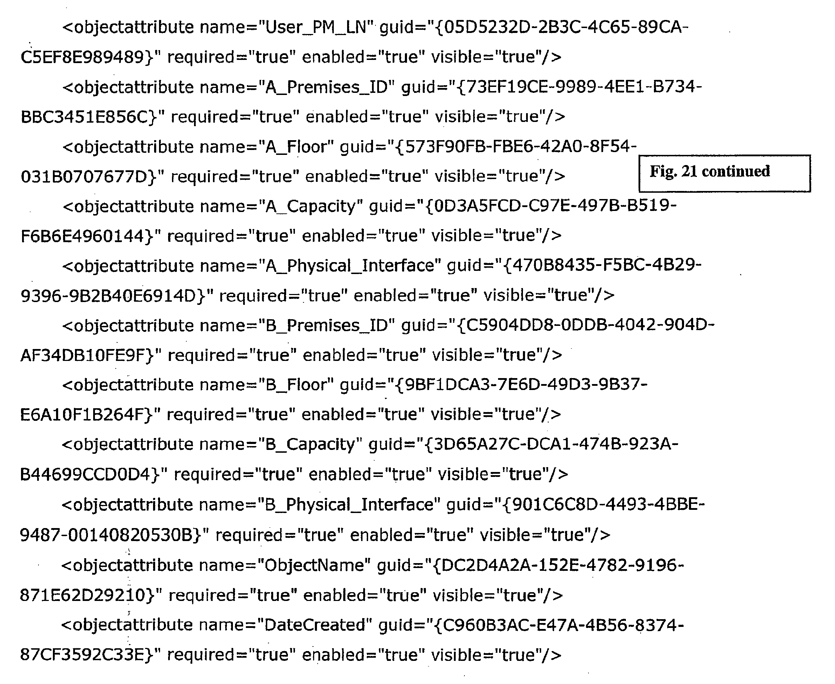

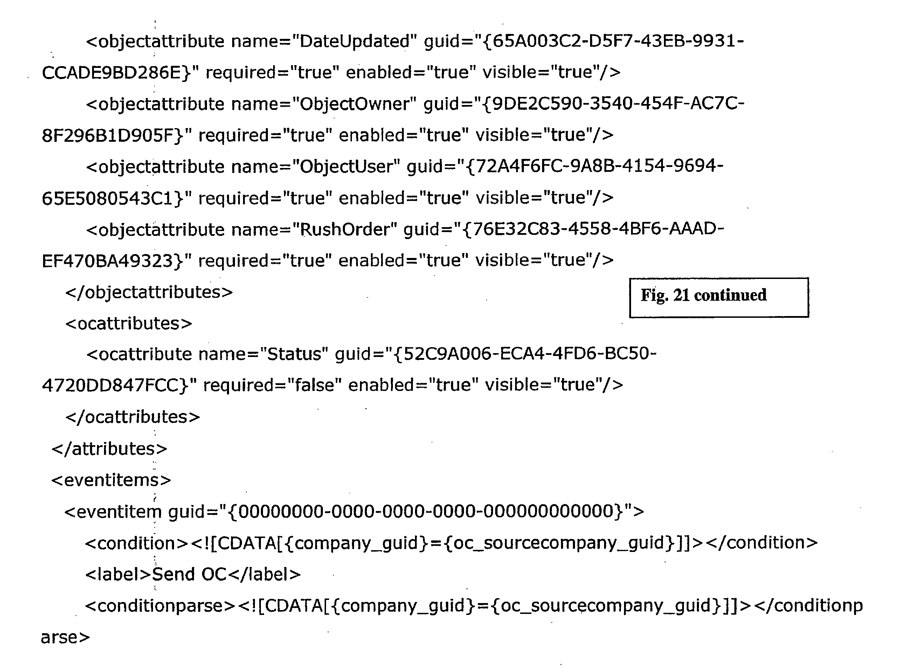

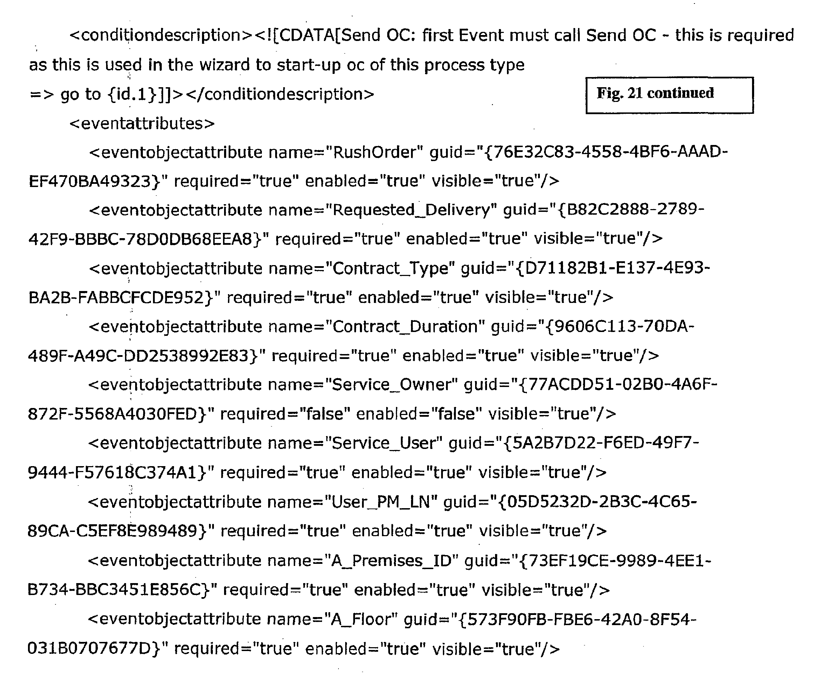

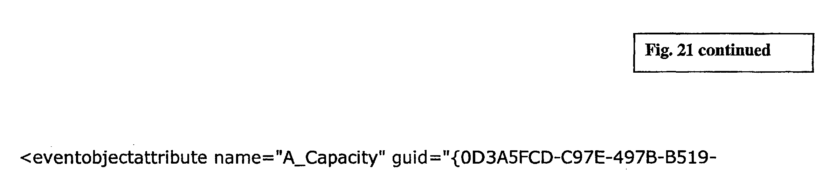

An example of a communication flow from a business prospective is given in Fig. 19. This example communication flow, is then translated into a tagged language version using a tagged language scheme as shown in Fig. 20, for instance. A tagged language file based on the aforementioned tagged language scheme looks as shown in Fig 21.

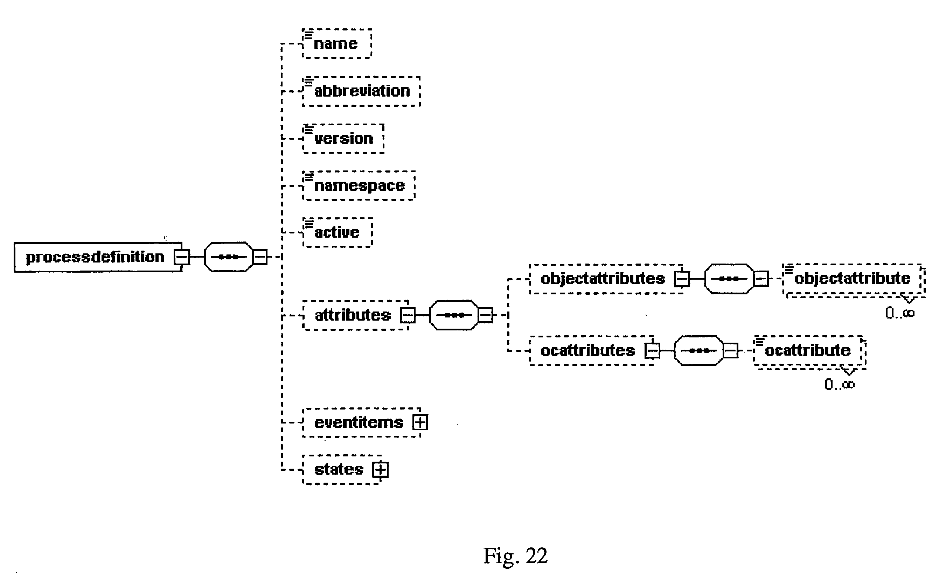

A Process XML Configuration is defined in a hierarchical manner of which the following way is an example (see Figs. 20 and 22). Although an XML document is described any suitable tagged language document can be used, e.g. as derived from SGML. At the highest level a process definition is provided which can include name which describes the name of the process definition. It may also include a Version indication. A further indication may be a NameSpace that the process definition belongs to. A flag may be included for indicating whether this process definition is 'operational' or not. The value of the flag is true or false. Additional nodes define attributes, eventitems and states.

The Attributes node (see Fig. 22) holds the attribute requirements for the Object and the OC Definitions interacting with this Process Definition. The objectattributes of this node are called Collaborative Object Attributes for this Process. A particularly important aspect is the technical information contained within the tags of ObjectAttributes as these tags define how the Object Attribute is perceived by the user of the system, as they are used to STEER the 'ObjecControl" module.

Further important technical data is found within the tags of OcAttributes as these tags define how the OC Attribute is perceived by the user of the system, as they are used to STEER the 'OC Control" module. The OcAttributes within this node are called collaborative OcAttributes. An implicit consequence is that these attributes are being used within this process. In other words: Once an object's OcAttribute is being used within an actionevent of a process, the attribute is required for this process and should be added to the respective node.

Collaborative ObjectAttributes are Object Attributes, defined within the scope of a process, which are required by the process.

Object and Process Compatibility is required if the process is to function correctly. An object is compatible with a process if all the requirements between object and process are met. Thus, this is the case when all collaborative Objectattributes (processdefinition/attributes/objectattributes node) are defined within the Object XML Definition.

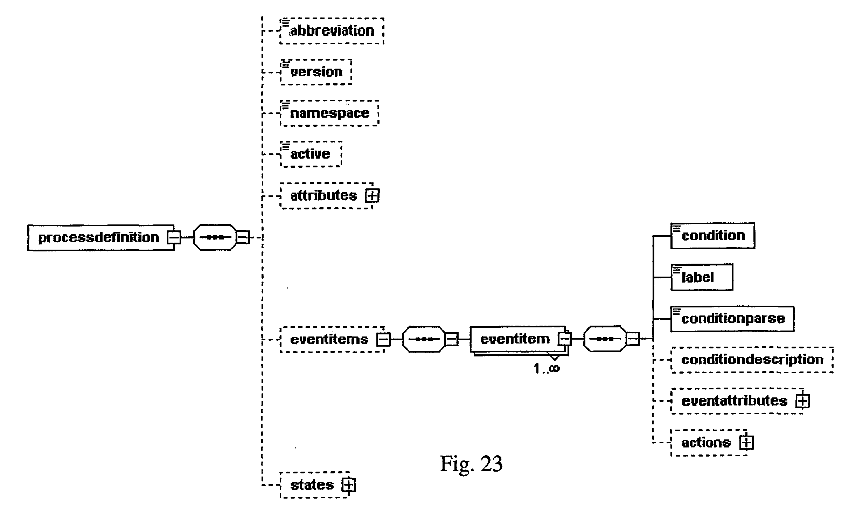

A part of a process definition deals with eventitems (see Fig. 23). EventItems describe the events which are available within a process. If the condition of an eventitem evaluates true within a certain context(/state), the eventitem is available within this context. If the eventitem is 'asked to perform', the requirements towards ocattributes and objectattributes are checked. If they comply, the actions defined within this eventitem are processed. Hence, the technical information contained within the tags of EventItem is important as it describes the condition which triggers the EventItem (procedure) after evalution is true.

Further important technical information is found in the tags of the EventAttributes in particular EventObjectAttributes. These tags define how the ObjectAttribute used within this process is behaving during the execution of this specific EventItem.

Similarly, EventOcAttributes are defined within EventAttributes. These tags define how the OctAttribute used within this process is behaving during the execution of this specific EventItem.

The tags of an Action within the Actions node define what specific actions are performed when this eventItem is triggered within the process. Thus these tages are important technical information stored within this tagged language document.

A further element of a process definition is the states. An attribute's (OC or Object attribute's) value is sometimes limited to a certain set of values. These values can either be filled using the fill property of the attribute defined within the object definition, or using the STATES value defined within the process definition. A STATES node holds all the values of the attributes defined within the processdefinition/attributes node. As a result: if an attribute has a stateattribute value list defined within the processdefinition/states, a corresponding attribute should exist in the processdefinition/attributes.

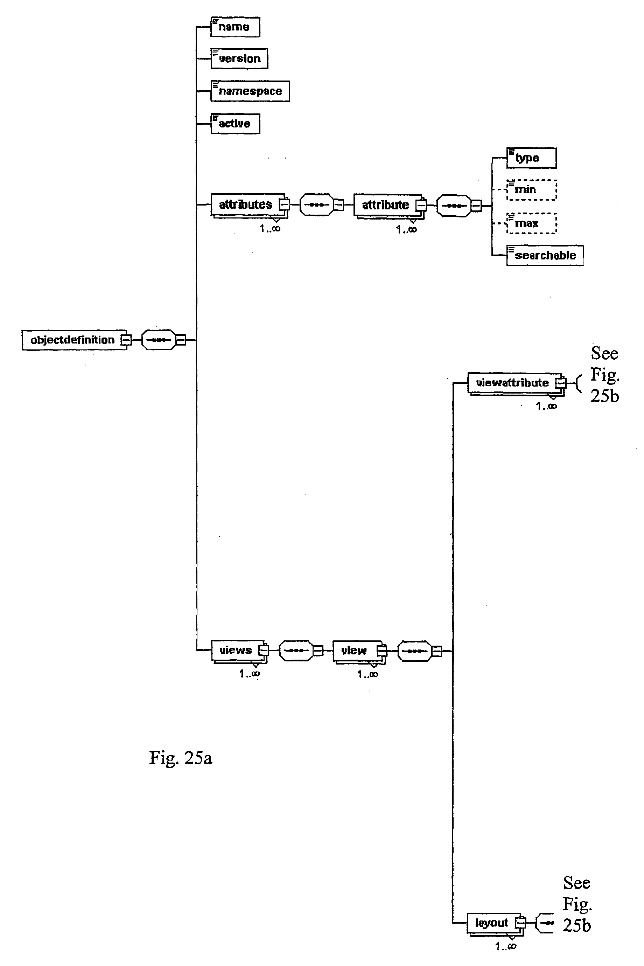

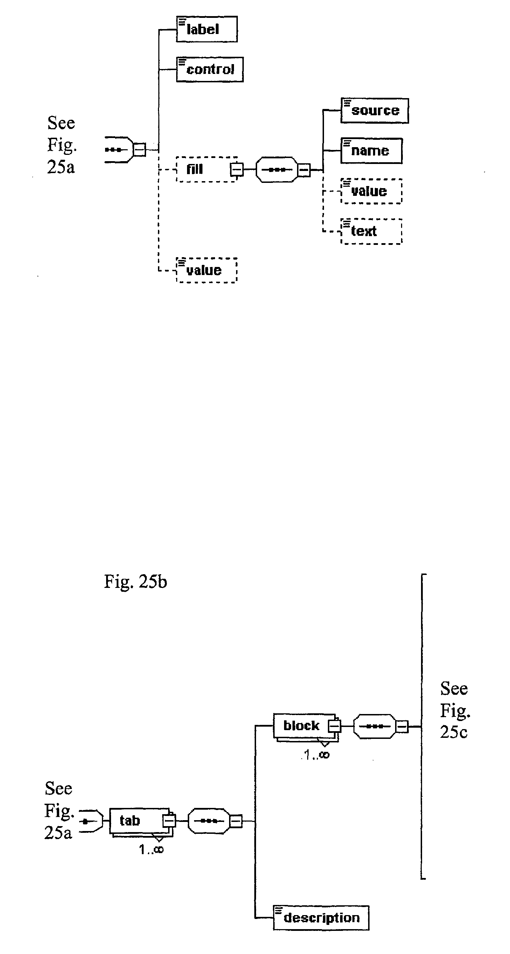

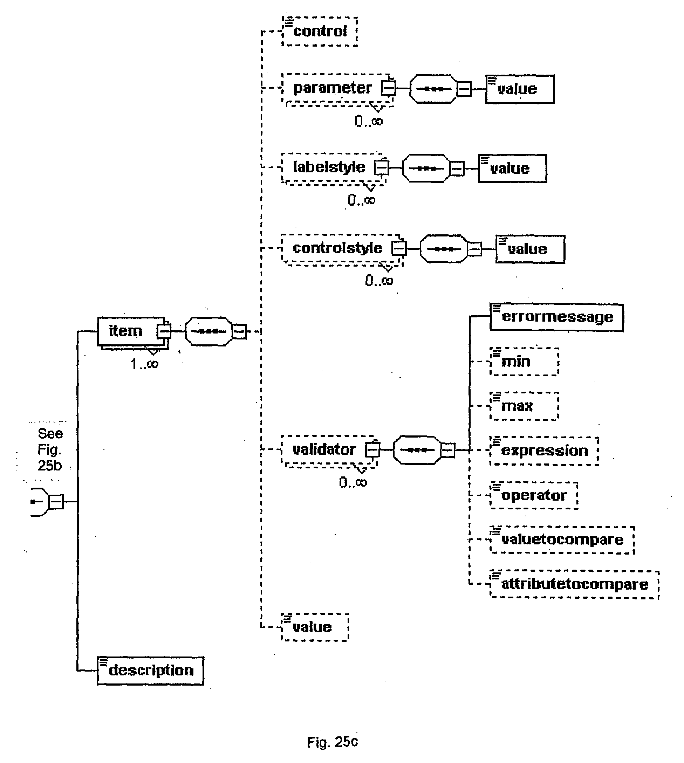

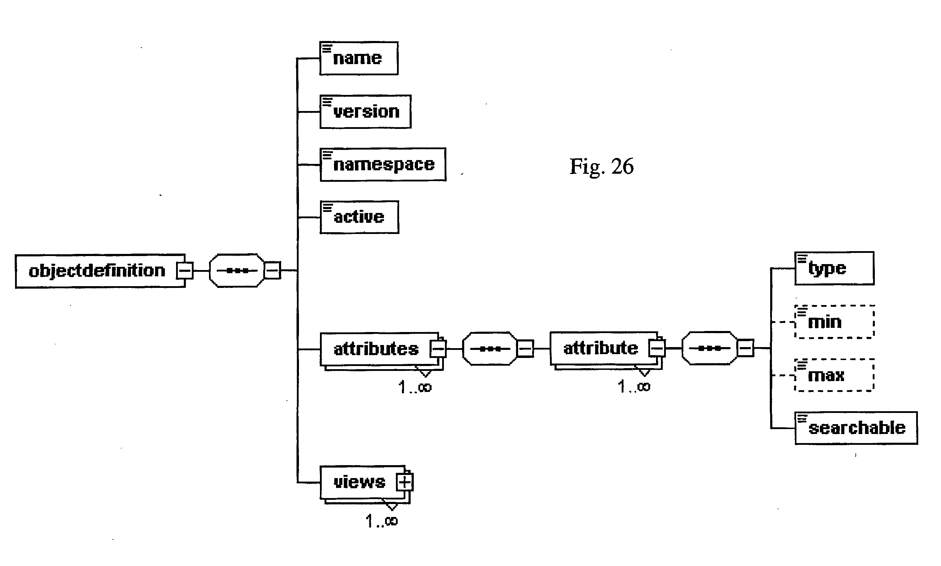

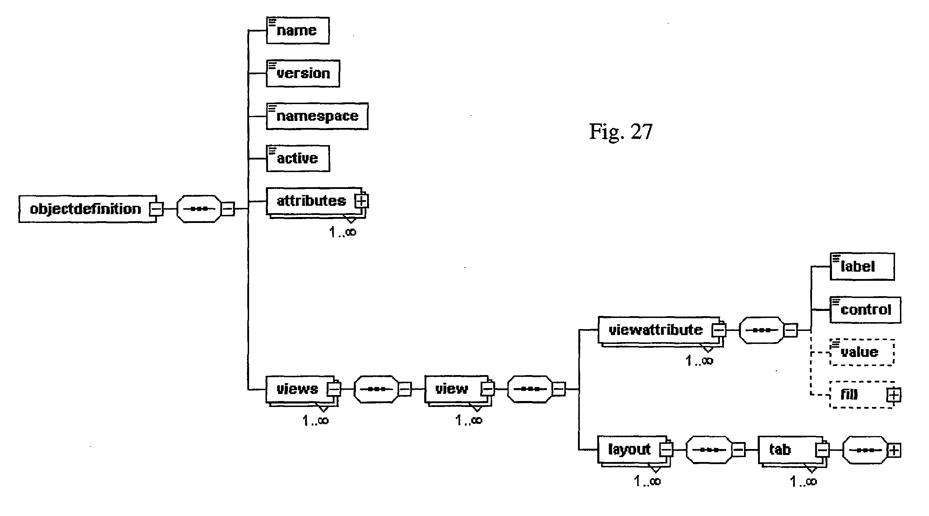

A Tagged language Object definition has a similar basic structure to the Process object but differs in details. An example of an object is given in Fig. 25. The definitions for an Object XML Configuration are given below with reference to Figs. 25-27. The Objectdefinition includes a name for describing the name of the object definition. It may also include a version which indicates the version of the object definition. Also the object definition may include a NameSpace defining which NameSpace this object definition belongs to. A flag may also be provided for indicating whether this object definition is 'operational' or not. The value of the flag is true or false.
The attributes node (Fig. 26) contains the attributes of which the object definition consists. It describes the data properties from the attribute (min val, max value, data type, searchable). It need not describe what the attribute should look like. If the Attribute tag is set, the attribute will be dynamically rendered within the search criteria screen.

The views/view nodes comprises a view which represents the look and feel of the object, within a certain scope. The attributes within this view (viewattributes) are a subset of the attributes defined within this objectdefinition. The scope is defined by a) a selection of the view. A default view should exist within VIEWS, b) a selection of the lay-out which describes the presentation of the object in various modes (WEBui full, WEBui small, print, searchcriteria, searchresults).

The object Lay-out is also defined. An Object lay-out is an extension (or a part of) OBJECT VIEW. An object lay-out is defined within the context of a company. Each company can have a different object-lay-out definition within a certain object definition. For each object definition, a DEFAULT OBJECT LAY-OUT should be available (part of the DEFAULT VIEW for this object definition). The Lay-out for an Object is always described within the context of a VIEW (for a certain company). Lay-out can be defined for several presentation modes. Each MODE for lay-out will be used within a well defined presentation device/type or within a specific functionality within a presentation device. For instance: OC wizard object details, print on web Interface, ...

Definitions for tagged language operational communication configuration (OcDefintion) can be constructed in a similar way. An overview is shown in Fig. 28.

While the invention has been shown and described with reference to preferred embodiments, it will be understood by those skilled in the art that various changes or modifications in form and detail may be made without departing from the scope and spirit of this invention.

## Claims

1. A computer based system for management of communications between a operational relationship management centre and at least a first and a second entity associated with the lifecycle management of goods and/or services, the first and second entities and the operational relationship management centre being linked for communication purposes by a wide area network, the operational relationship management centre being for central control of structured communications between the at least first and second entities, the operational relationship management centre comprising:
first memory means for storing information relating to concrete objects associated with the lifecyle management of goods and/or service and under control of at least one of the entities, or default information relating to an unknown object,
second memory means for storing information defining predefined Business processes allowed by the operational relationship management centre, each Business process comprising an exchange of at least one message from the first entity to the second entity via the operational relationship management centre or vice versa,
means for providing the first or second entity with access to one of the predefined Business processes,
means for allowing the first or second entity to associate a concrete object or an unknown object with the Business process, and
tracking means for tracking the progress of the Business process between the first and second entities.

2. A computer based operational relationship management centre for management of communications with at least a first and a second entity associated with the provision of telecommunications services, the first and second entities and the operational relationship management centre being adapted for communication purposes via a wide area network, the operational relationship management centre being for central control of structured communications between the at least first and second entities, the operational relationship management centre comprising:
first memory means for storing information relating to concrete objects associated with the lifecycle management of service and/or goods and under control of at least one of the entities, or default information relating to an unknown object,
second memory means for storing information defining predefined Business processes allowed by the operational relationship management centre, each Business process comprising an exchange of at least one message from the first entity to the second entity via the operational relationship management centre or vice versa,
means for providing the first or second entity with access to one of the predefined Business processes,
means for allowing the first or second entity to associate a concrete object or an unknown object with the Business process, and
tracking means for tracking the progress by means of an evidence trail of the Business process between the first and second entities.

3. The system according to claim 1 or centre according to claim 2, wherein the first memory means also stores an association between each object and one of the first and second entities.

4. The system or centre according to any previous claim, further comprising third memory means to store a record of each message.

5. The system or centre according to any previous claim, further comprising fourth memory means for storing profile information relating to the first and second entities.

6. The system or centre according to claim 5, further comprising means for allowing the first and second entities to enter the profile information into the fourth memory means.

7. The system or centre according to claim 6, further comprising at least one interface between the operational relationship management centre and a wide area network which allows the first and second entities to download profile information into the fourth memory means.

8. The system or centre according to any previous claim, in which the first and second entities have an organisational structure comprising organisational units, further comprising a fifth memory means to store information relating to the organisational structure of each of the first and second entities.

9. The system or centre according to any previous claim, further comprising means for notifying the first and second entities of messages.

10. The system or centre according to any previous claim, wherein the tracking means includes a timer and means to initiate a communication event if a time measured by the timer after the last message in a Business process exceeds a threshold value.

11. The system or centre according to any previous claim, wherein the means for providing the first or second entity with access to one of the predefined Business processes, comprises means to allow the first or second entity to structure a Business process by associating an organisational unit of the first or second entity with the Business process.

12. The system or centre according to any previous claim wherein a process is at least one of the following:
determining status: controlled process of notification of situation
an escalation: uncontrolled process of notification by increasing level
a fault notification: pro-active or re-active notification of a problem
a request for quote and order: negotiation process preceding provisioning tracking provisioning tracking: request to rent a line
a request for site or premises access: all parties involved have to authorise the access
co-ordination of planned activities: co-ordination of impact of works
co-ordination of infrastructure works: co-ordination of planned infrastructure works to multiple parties.

13. The system or centre according to any previous claim, further comprising means for integrating existing computer systems from first and second entities
